(19) Europäisches Patentamt
European Patent Office
Office européen des brevets

(11) **EP 4 518 467 A1**

(12) **EUROPEAN PATENT APPLICATION**
published in accordance with Art. 153(4) EPC

(43) Date of publication:
**05.03.2025 Bulletin 2025/10**

(21) Application number: **23815311.8**

(22) Date of filing: **02.06.2023**

(51) International Patent Classification (IPC):
***H04W 64/00*** *(2009.01)*

(52) Cooperative Patent Classification (CPC):
**H04W 64/00**

(86) International application number:
**PCT/CN2023/097943**

(87) International publication number:
**WO 2023/232134 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.06.2022   CN 202210621423**
**02.06.2022   CN 202210621435**

(71) Applicant: **Fuyao Glass Industry Group Co., Ltd.**
**Fuqing, Fujian 350300 (CN)**

(72) Inventors:
• **TENG, Yu**
  **Fuqing, Fujian 350300 (CN)**
• **CAI, Jianping**
  **Fuqing, Fujian 350300 (CN)**
• **YANG, Renyi**
  **Fuqing, Fujian 350300 (CN)**
• **HE, Kai**
  **Fuqing, Fujian 350300 (CN)**
• **PAN, Chengwei**
  **Fuqing, Fujian 350300 (CN)**
• **CHEN, Bihui**
  **Fuqing, Fujian 350300 (CN)**
• **LIN, Yucai**
  **Fuqing, Fujian 350300 (CN)**

(74) Representative: **Mewburn Ellis LLP**
**Aurora Building**
**Counterslip**
**Bristol BS1 6BX (GB)**

(54) **POSITIONING METHOD, POSITIONING APPARATUS, AND COMPUTER-READABLE STORAGE MEDIUM AND VEHICLE**

(57)    This disclosure relates to a positioning method, a positioning apparatus, a computer-readable storage medium, and a vehicle. The positioning method is applied to a lock end and includes the following. The lock end sends first information and records a first sending moment of the first information. The key end receives the first information, records a first receiving moment, and sends second information to the lock end, where the second information includes request information, a second sending moment of the request information, and the first receiving moment. The lock end receives the second information, records a second receiving moment, and calculates a difference between the second sending moment and the first receiving moment. The lock end calculates a distance between the lock end and the key end according to the first sending moment, the second receiving moment, and the difference between the second sending moment and the first receiving moment, to implement positioning of the key end or the lock end. The positioning method described in the disclosure improves the interaction precision in algorithm, reduces the time-error, and thus improves the positioning precision.

SEND FIRST INFORMATION AND RECORD FIRST SENDING MOMENT OF FIRST INFORMATION, WHERE FIRST INFORMATION INDICATES KEY END TO EXECUTE FOLLOWING OPERATIONS: RECEIVE FIRST INFORMATION AND RECORD FIRST RECEIVING MOMENT OF FIRST INFORMATION; AND SEND SECOND INFORMATION TO LOCK END, WHERE SECOND INFORMATION INCLUDES REQUEST INFORMATION, SECOND SENDING MOMENT OF REQUEST INFORMATION, AND FIRST RECEIVING MOMENT — S101

RECEIVE SECOND INFORMATION, RECORD SECOND RECEIVING MOMENT OF SECOND INFORMATION, AND CALCULATE DIFFERENCE BETWEEN SECOND SENDING MOMENT AND FIRST RECEIVING MOMENT — S102

CALCULATE DISTANCE BETWEEN LOCK END AND KEY END ACCORDING TO FIRST SENDING MOMENT, SECOND RECEIVING MOMENT, AND DIFFERENCE BETWEEN SECOND SENDING MOMENT AND FIRST RECEIVING MOMENT, TO IMPLEMENT POSITIONING OF KEY END OR LOCK END — S103

FIG. 1

**Description**

This application claims priority to Chinese Patent Application No. 202210621423.X, filed with the Chinese Patent Office on June 02, 2022 and entitled "POSITIONING METHOD, POSITIONING APPARATUS, COMPUTER-READABLE STORAGE MEDIUM, AND VEHICLE", the entire disclosure of which is hereby incorporated by reference. This application also claims priority to Chinese Patent Application No. 202210621435.2, filed with the Chinese Patent Office on June 02, 2022 and entitled "POSITIONING METHOD, POSITIONING APPARATUS, COMPUTER-READABLE STORAGE MEDIUM, AND VEHICLE", the entire disclosure of which is hereby incorporated by reference.

TECHNICAL FIELD

This disclosure relates to the field of communication technologies, and specifically to a positioning method, a positioning apparatus, a computer-readable storage medium, and a vehicle.

BACKGROUND

An existing Bluetooth key is mainly a mobile phone with Bluetooth or a wearable Bluetooth device. As vehicles develop towards intelligentization, informatization, and electronization, and application modes and scenarios become diversified, users are increasingly demanding on the positioning precision of a vehicle key. Ultra-wideband (UWB) is a carrier-free communication technology, and a sub-nanosecond ultra-narrow pulse of the UWB has been used for close-range precise positioning in recent years. A UWB device is equipped with a crystal oscillator which serves to generate a clock frequency, and the UWB device receives and transmits a UWB signal according to the clock frequency. In other words, each hardware device has its own internal clock, and since UWB devices operate according to their respective time systems, there is a time difference between the UWB devices. In addition, even if clocks of multiple UWB devices are started at the same standard time, the clocks of multiple UWB devices cannot remain synchronized for a long time due to clock drift. The clock drift occurs due to factors such as production process, temperature change, environmental change, or aging degree. Therefore, the problem of time asynchronization is difficult to be avoided. Since UWB-based distance calculation needs to multiply time by the speed of light, a slight error in time will lead to a large distance error.

SUMMARY

A positioning method, a positioning apparatus, and a computer-readable storage medium, and a vehicle are provided in the disclosure. The positioning method improves the interaction precision in algorithm, so that recording and calculation of time by ultra-wideband (UWB) devices take place in the same timing system during positioning, thereby improving the positioning precision.

A positioning method is provided in a first concept of the disclosure. The positioning method is applied to a lock end and includes the following. First information is sent and a first sending moment of the first information is recorded. The first information indicates a key end to execute the following operations: receiving the first information and recording a first receiving moment of the first information; and sending second information to the lock end, where the second information includes request information, a second sending moment of the request information, and the first receiving moment. The second information is received, a second receiving moment of the second information is recorded, and a difference between the second sending moment and the first receiving moment is calculated. A distance between the lock end and the key end is calculated according to the first sending moment, the second receiving moment, and the difference between the second sending moment and the first receiving moment, to implement positioning of the key end or the lock end.

Optionally, sending the first information and receiving the second information are repeated. A number of repetitions is $m$, the first sending moment is $Ta(2m\text{-}1)$, the second receiving moment is $Ta2m$, the first receiving moment is $Ta(2m\text{-}1)$, the second sending moment is $Tb2m$, and the difference between the second sending moment and the first receiving moment is $Ta(2m)(2m\text{-}1)$. The distance between the lock end and the key end is calculated according to the first sending moment, the second receiving moment, and the difference between the second sending moment and the first receiving moment, to implement positioning of the key end or the lock end as follows. The distance $S$ between the lock end and the key end is calculated according to a formula $S=[Ta2\text{-}Ta1\text{-}Tb21+...+Ta(2m)\text{-}Ta(2m\text{-}1)\text{-}Tb(2m)(2m\text{-}1)]\times C\div(2m)$, where $C$ is a propagation speed of a signal in air.

Optionally, before the first information is sent, the positioning method further includes the following. Third information is received from the key end and a third receiving moment $Ta0$ of the third information is recorded, where the second information further includes a third sending moment $Tb0$ and the third receiving moment $Ta0$ of the third information. The distance between the lock end and the key end is calculated to implement positioning of the key end or the lock end as follows. According to a formula $S=[(Tb1\text{-}Tb0)\text{-}(Ta1\text{-}Ta0)+Ta2\text{-}Ta1\text{-}Tb21+...+Ta(2m)\text{-}Ta(2m\text{-}1)\text{-}Tb(2m)(2m\text{-}1)]\times C\div(2m+2)$.

Optionally, the lock end includes $P$ positioning modules, $P \geq 3$, and the positioning method further includes the following. A distance between the key end and each of the $P$ positioning modules in the lock end is calculated. The key end is positioned according to the distance between the key end and each of the $P$ positioning modules.

A positioning method is further provided in the first concept of the disclosure. The positioning method is applied to a key end and includes the following. First information is received from a lock end and a first receiving moment of the first information is recorded. Second information is sent to the lock end. The second information includes request information, a second sending moment of the request information, and the first receiving moment. The second information indicates the lock end to execute the following operations: receiving the second information, recording a second receiving moment of the second information, and calculating a difference between the second sending moment and the first receiving moment; and calculating a distance between the lock end and the key end according to a first sending moment of the first information, the second receiving moment, and the difference between the second sending moment and the first receiving moment, to implement positioning of the key end or the lock end.

Optionally, receiving the first information from the lock end and sending the second information to the lock end are repeated. A number of repetitions is $m$, the first sending moment is $Ta(2m-1)$, the second receiving moment is $Ta2m$, the first receiving moment is $Tb(2m-1)$, the second sending moment is $Tb2m$, and the difference between the second sending moment and the first receiving moment is $Tb(2m)(2m-1)$. The distance between the lock end and the key end is calculated by the lock end according to the first sending moment, the second receiving moment, and the difference between the second sending moment and the first receiving moment, to implement positioning of the key end or the lock end as follows. The distance S between the lock end and the key end is calculated according to a formula $S=[Ta2-Ta1-Tb21 +... +Ta(2m)-Ta(2m-1)-Tb(2m)(2m-1)] \times C \div (2m)$, where $C$ is a propagation speed of a signal in air.

Optionally, before the first information is received from the lock end, the positioning method further includes the following. Third information is sent and a third sending moment $Tb0$ of the third information is recorded, where the second information further includes the third sending moment $Tb0$ and a third receiving moment $Ta0$ of the third information. The distance between the lock end and the key end is calculated to implement positioning of the key end or the lock end as follows. According to a formula $S=[ (Tb1-Tb0)-(Ta1-Ta0)+Ta2-Ta1-Tb21+...+Ta(2m)-Ta(2m-1)- Tb(2m)(2m-1)] \times C \div (2m+2)$.

Optionally, the lock end includes $P$ positioning modules, $P \geq 3$, and the positioning method further includes the following. A distance between the key end and each of the $P$ positioning modules in the lock end is calculated. The key end is positioned according to the distance between the key end and each of the $P$ positioning modules.

A positioning method is further provided in the first concept of the disclosure. The positioning method is applied to a key end and includes the following. Fourth information is sent and a fourth sending moment of the fourth information is recorded. The fourth information indicates a lock end to execute the following operations: receiving the fourth information and recording a fourth receiving moment of the fourth information; and sending fifth information to the key end, where the fifth information includes request information; and recording a fifth sending moment of the request information. The fifth information is received and a fifth receiving moment of the fifth information is recorded, the fifth information is packed, and a current time is recorded as a sixth sending moment after completion of packing. Sixth information is sent. The sixth information indicates the lock end to execute the following operations: receiving the sixth information and recording a sixth receiving moment of the sixth information, where the sixth information includes request information, a difference between the fifth receiving moment and the fourth sending moment, and a difference between the sixth sending moment and the fifth receiving moment. A distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end.

Optionally, sending the fourth information, receiving the fifth information, and sending the sixth information are repeated. A number of repetitions is $m$, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, the difference between the fifth receiving moment $Ta2m$ and the fourth sending moment $Ta(2m-1)$ is $Ta(2m)(2m-1)$, the difference between the sixth sending moment and the fifth receiving moment is $Ta(2m+1)2m$, and the sixth receiving moment is $Tb(2m+1)$. The distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end as follows. The distance S between the lock end and the key end is calculated according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\} \times C \div (4m)$, where $C$ is a propagation speed of a signal in air.

Optionally, before the fourth information is sent, the positioning method further includes the following. Seventh information is received from the lock end and a seventh receiving moment $Ta0$ of the seventh information is recorded, where the fifth information further includes a seventh sending moment $Tb0$ and the seventh receiving moment $Ta0$ of the seventh information. The distance between the lock end and the key end is calculated according to the seventh sending

moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, to implement positioning of the key end or the lock end as follows. According to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+ [Tb(2m+1)-Tb (2m) ]-Ta(2m+1)(2m)\}\times C\div(4m+4)$.

Optionally, the lock end includes $P$ positioning modules, $P\geq3$, and the positioning method further includes the following. A distance between the key end and each of the $P$ positioning modules in the lock end is calculated. The key end is positioned according to the distance between the key end and each of the $P$ positioning modules in the lock end.

A positioning method is further provided in the first concept of the disclosure. The positioning method is applied to the lock end and includes the following. Fourth information is received from a key end and a fourth receiving moment of the fourth information is recorded. Fifth information is sent to the key end and a fifth sending moment of the fifth information is recorded. The fifth information includes request information, and the fifth information indicates the key end to execute the following operations: receiving the fifth information and recording a fifth receiving moment of the fifth information, packing the fifth information, and recording a current time as a sixth sending moment after completion of packing; and calculating a difference between the fifth receiving moment of the fifth information and a fourth sending moment of the fourth information and the difference between the fifth receiving moment of the fifth information and the fourth sending moment of the fourth information, and sending sixth information to the lock end. The sixth information is received from the key end and a sixth receiving moment of the sixth information is recorded, where the sixth information includes request information, the difference between the fifth receiving moment and the fourth sending moment, and a difference between the sixth sending moment and the fifth receiving moment. A distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end.

Optionally, receiving the fourth information from the key end, sending the fifth information, and receiving the sixth information from the key end are repeated. A number of repetitions is $m,$ the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, the difference between the fifth receiving moment $Ta2m$ and the fourth sending moment $Ta(2m-1)$ is $Ta2m(2m-1)$, the difference between the sixth sending moment and the fifth receiving moment is $Ta(2m+1)2m$, and the sixth receiving moment is $Tb(2m+1)$. The distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end as follows. The distance S between the lock end and the key end is calculated according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb (2m) ]-Ta(2m+1)(2m)\}\times C\div(4m)$, where $C$ is a propagation speed of a signal in air.

Optionally, before the fourth information is received from the key end, the positioning method further includes the following. Seventh information is sent and a seventh sending moment $Tb0$ of the seventh information is recorded, where the fifth information further includes the seventh sending moment $Tb0$ and a seventh receiving moment $Ta0$ of the seventh information. The distance between the lock end and the key end is calculated according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, to implement positioning of the key end or the lock end as follows. According to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+ [Tb(2m+1)-Tb (2m) ]-Ta(2m+1)(2m)\}\times C\div(4m+4)$.

Optionally, the lock end includes $P$ positioning modules, $P\geq3$, and the positioning method further includes the following. A distance between the key end and each of the $P$ positioning modules in the lock end is calculated. The key end is positioned according to the distance between the key end and each of the $P$ positioning modules in the lock end.

A positioning apparatus is further provided in the first concept of the disclosure. The positioning apparatus is applied to a lock end, and includes a first sending module, a first receiving module, and a first calculating module. The first sending module is configured to send first information to a key end and record a first sending moment of the first information. The first information indicates the key end to execute the following operations: receiving the first information and recording a first receiving moment of the first information; sending second information to the lock end, where the second information includes request information, a second sending moment of the request information, and the first receiving moment. The first receiving module is configured to receive the second information from the key end and record a second receiving moment of the second information. The first calculating module is configured to calculate a difference between the second sending moment and the first receiving moment; and calculate, according to the first sending moment, the second receiving moment, and the difference between the second sending moment and the first receiving moment, a distance between the positioning apparatus and the key end to implement positioning of the lock end or the key end.

Optionally, the first sending module is configured to repeatedly send the first information, and the first receiving module is configured to repeatedly receive the second information in a synchronous manner. A number of repetitions is $m$, the first sending moment is $Ta(2m\text{-}1)$, the second receiving moment is $Ta2m$, the first receiving moment is $Tb(2m\text{-}1)$, the second sending moment is $Tb2m$, and the difference between the second sending moment and the first receiving moment is $Tb(2m)(2m\text{-}1)$. In terms of calculating, according to the first sending moment, the second receiving moment, and the difference between the second sending moment and the first receiving moment, the distance between the positioning apparatus and the key end to implement positioning of the key end or the lock end, the first calculating module is configured to calculate the distance S between the lock end and the key end according to a formula $S=[Ta2\text{-}Ta1\text{-}Tb21 +...+Ta(2m)\text{-}Ta(2m\text{-}1)\text{-}Tb(2m)(2m\text{-}1)]\times C\div(2m)$, where $C$ is a propagation speed of a signal in air.

Optionally, the first receiving module is further configured to receive third information from the key end and record a third receiving moment $Ta0$ of the third information before the first sending module sends the first information. The second information further includes a third sending moment $Tb0$ and the third receiving moment $Ta0$ of the third information. In terms of calculating the distance between the lock end and the key end to implement positioning of the key end or the lock end, the first calculating module is configured to calculate the distance S between the lock end and the key end according to a formula $S=[(Tb1\text{-}Tb0)\text{-}(Ta1\text{-}Ta0)+Ta2\text{-}Ta1\text{-}Tb21+...+Ta(2m)\text{-}Ta(2m\text{-}1)\text{-} Tb(2m)(2m\text{-}1)]\times C\div(2m +2)$, where $C$ is a propagation speed of a signal in air.

Optionally, the positioning apparatus further includes $P$ positioning modules, and $P\geq3$. The first calculating module is further configured to calculate a distance between the key end and each of the $P$ positioning modules in the positioning apparatus, and position the key end according to the distance between the key end and each of the $P$ positioning modules.

A positioning apparatus is further provided in the first concept of the disclosure. The positioning apparatus is applied to a key end, and includes a second receiving module and a second sending module. The second receiving module is configured to receive first information from a lock end and record a first receiving moment of the first information. The second sending module is configured to send second information to the lock end. The second information includes request information, a second sending moment of the request information, and the first receiving moment. The second information indicates the lock end to execute the following operations: receiving the second information, recording a second receiving moment of the second information, and calculating a difference between the second sending moment and the first receiving moment; and calculating a distance between the lock end and the positioning apparatus according to the first sending moment of the first information, the second receiving moment, and the difference between the second sending moment and the first receiving moment, to implement positioning of the key end or the lock end.

Optionally, in the positioning apparatus, the second receiving module is configured to repeatedly receive the first information from the lock end, and repeatedly send second information to the lock end in a synchronous manner. A number of repetitions is $m$, the first sending moment is $Ta(2m\text{-}1)$, the second receiving moment is $Ta2m$, the first receiving moment is $Tb(2m\text{-}1)$, the second sending moment is $Tb2m$, and the difference between the second sending moment and the first receiving moment is $Tb(2m)(2m\text{-}1)$. In terms of calculating, according to the first sending moment, the second receiving moment, and the difference between the second sending moment and the first receiving moment, the distance between the lock end and the positioning apparatus to implement positioning of the key end or the lock end, the lock end is configured to calculate the distance S between the lock end and the positioning apparatus according to a formula $S=[Ta2\text{-}Ta1\text{-}Tb21+...+Ta(2m)\text{-}Ta(2m\text{-}1)\text{-}Tb(2m)(2m\text{-}1)]\times C\div(2m)$, where $C$ is a propagation speed of a signal in air.

Optionally, the second sending module is further configured to send third information to the lock end and record a third sending moment $Tb0$ of the third information before the positioning apparatus receives the first information from the lock end. The second information further includes the third sending moment $Tb0$ and a third receiving moment $Ta0$ of the third information. In terms of calculating the distance between the lock end and the positioning apparatus to implement positioning of the key end or the lock end, the lock end is configured to: according to a formula $S=[(Tb1\text{-}Tb0)\text{-}(Ta1\text{-}Ta0)+Ta2\text{-}Ta1\text{-}Tb21+...+Ta(2m)\text{-}Ta(2m\text{-}1)\text{-}Tb(2m)(2m\text{-}1)]\times C\div(2m+2)$.

Optionally, the lock end further includes $P$ positioning modules, and $P\geq3$. The lock end is further configured to calculate a distance between the positioning apparatus and each of the $P$ positioning modules in the lock end, and position the key end according to the distance between the positioning apparatus and each of the $P$ positioning modules.

A positioning apparatus is further provided in the first concept of the disclosure. The positioning apparatus is applied to a key end, and includes a third sending module, a third receiving module, and a third calculating module. The third sending module is configured to send fourth information to a lock end and record a fourth sending moment of the fourth information. The fourth information indicates the lock end to execute the following operations: receiving the fourth information, recording a fourth receiving moment of the fourth information, and sending fifth information to the key end, where the fifth information includes request information; and recording a fifth sending moment of the request information. The third receiving module is configured to receive the fifth information from the lock end and record a fifth receiving moment of the fifth information, pack the fifth information, and record a current time as a sixth sending moment after completion of packing. The third sending module is further configured to send sixth information to the lock end. The sixth information indicates the lock end to execute the following operations: receiving the sixth information and recording a sixth receiving moment of the sixth information, where the sixth information includes request information, a difference between the fifth receiving moment and the fourth sending moment, and a difference between the sixth sending moment and the fifth receiving moment. The third calculating module is configured to calculate the difference between the fifth receiving moment and the fourth sending moment and the difference between the sixth sending moment and the fifth receiving moment. The lock end is configured to calculate, according to the difference between the fifth receiving moment and the fourth sending moment, the fourth receiving moment, the fifth sending moment, the sixth receiving moment, and the difference between the sixth sending moment and the fifth receiving moment, a distance between the positioning apparatus and the lock end to implement positioning of the lock end or the key end.

Optionally, the third sending module is configured to repeatedly send the fourth information, the third receiving module is configured to repeatedly receive the fifth information in a synchronous manner, and the third sending module is further configured to repeatedly send the sixth information. A number of repetitions is $m$, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, and the sixth receiving moment is $Tb(2m+1)$. The third calculating module is configured to calculate the difference $Ta(2m)(2m-1)$ between the fifth receiving moment $Ta2m$ and the fourth sending moment $Ta(2m-1)$ and the difference $Ta(2m+1)2m$ between the sixth sending moment and the fifth receiving moment. In terms of calculating, according to the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the lock end to implement positioning of the lock end or the key end, the lock end is configured to calculate the distance $S$ between the lock end and the key end according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C\div(4m)$, where C is a propagation speed of a signal in air.

Optionally, the third receiving module is further configured to receive seventh information from the lock end and record a seventh receiving moment $Ta0$ of the seventh information before the third sending module sends the fourth information. The fifth information further includes a seventh sending moment $Tb0$ and the seventh receiving moment $Ta0$ of the seventh information. In terms of calculating, according to the seventh sending moment $Tb0$, the seventh receiving moment $Ta0$, the fourth sending moment, the difference between the fifth sending moment and the fourth receiving moment, the difference between the sixth sending moment and the fifth receiving moment, and the sixth receiving moment, the distance between the lock end and the positioning apparatus to implement positioning of the key end or the lock end, the lock end is configured to calculate the distance $S$ between the lock end and the key end according to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C\div(4m+4)$, where $C$ is a propagation speed of a signal in air.

Optionally, the lock end includes $P$ positioning modules, and $P\geq3$. The lock end is further configured to calculate a distance between the positioning apparatus and each of the $P$ positioning modules in the lock end, and position the key end according to the distance between the positioning apparatus and each of the $P$ positioning modules in the lock end.

A positioning apparatus is further provided in the first concept of the disclosure. The positioning apparatus is applied to a lock end, and includes a fourth sending module, a fourth receiving module, and a fourth calculating module. The fourth receiving module is configured to receive fourth information from a key end and record a fourth receiving moment of the fourth information. The fourth sending module is configured to send fifth information to the key end and record a fifth sending moment of the fifth information. The fifth information includes request information, and the fifth information indicates the key end to execute the following operations: receiving the fifth information and recording a fifth receiving moment of the fifth information, packing the fifth information, and recording a current time as a sixth sending moment after completion of packing; calculating a difference between the fifth receiving moment of the fifth information and a fourth sending moment of the fourth information and the difference between the fifth receiving moment of the fifth information and the fourth sending moment of the fourth information; and sending sixth information to the positioning apparatus. The fourth receiving module is further configured to receive the sixth information from the key end and record a sixth receiving moment of the sixth information. The sixth information includes request information, the difference between the fifth receiving moment and the fourth sending moment, and a difference between the sixth sending moment and the fifth receiving moment. The fourth calculating module is configured to calculate, according to the difference between the fifth receiving moment and the fourth sending moment, the fourth receiving moment, the fifth sending moment, the sixth receiving moment, and the difference between the sixth sending moment and the fifth receiving moment, a distance between the positioning apparatus and the key end to implement positioning of the lock end or the key end.

Optionally, the fourth receiving module is configured to repeatedly receive the fourth information from the key end, the fourth sending module is configured to repeatedly send the fifth information to the key end in a synchronous manner, and the fourth receiving module is further configured to repeatedly receive the sixth information from the key end. A number of repetitions is $m$, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, and the sixth receiving moment is $Tb(2m+1)$. The fourth calculating module is configured to calculate the difference $Ta2m(2m-1)$ between the fifth receiving moment $Ta2m$ and the fourth sending moment $Ta(2m-1)$ and the difference $Ta(2m+1)2m$ between the sixth sending moment and the fifth receiving moment. In terms of calculating, according to the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the key end to implement positioning of the lock end or the key end, the fourth calculating module is configured to calculate the distance S between the lock end and the key end according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C\div(4m)$, where $C$ is a propagation speed of a signal in air.

Optionally, the fourth sending module is configured to send seventh information to the key end and record a seventh sending moment $Tb0$ of the seventh information before the fourth receiving module receives the fourth information from the key end. The fifth information further includes the seventh sending moment $Tb0$ and a seventh receiving moment $Ta0$ of the seventh information. In terms of calculating, according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the key end to implement positioning of the key end or the lock end, the fourth calculating module is configured to: according to a formula

$$S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C\div(4m+4).$$

Optionally, the positioning apparatus includes $P$ positioning modules, and $P\geq3$. The fourth calculating module is further configured to calculate a distance between the key end and each of the $P$ positioning modules in the positioning apparatus, and position the key end according to the distance between the key end and each of the $P$ positioning modules in the positioning apparatus.

A computer-readable storage medium is further provided in the first concept of the disclosure. The computer-readable storage medium is configured to store computer-executable program codes. The computer-executable program codes are configured to cause a computer to perform the positioning method based on the first concept of the disclosure.

A vehicle is further provided in the first concept of the disclosure. The vehicle includes a memory and a processor electrically connected with the memory. The memory is configured to store program codes executable by the processor, and the program codes which, when invoked and executed by the processor, are operable to perform the positioning method based on the first concept of the disclosure.

As such, the positioning method based on the first concept of the disclosure improves the interaction precision in algorithm. In the process of sending and receiving information, recording and calculation of time take place in the same timing system during positioning, and thus the transmission time of the information in the same device can be eliminated, so that a precise time for propagation of the information between the lock end and the key end can be obtained. Then, an average time is obtained through repeated measurements, and thus the time error is further reduced. In addition, a multi-pass average ranging algorithm is used for calculation, thereby improving the positioning precision.

A positioning method is provided in a second concept of the disclosure. The positioning method is applied to a lock end, and the lock end includes multiple antenna modules. The method includes the following. Request information is received from a key end, and a receiving moment for reception of the request information by each of the multiple antenna modules is calculated, where the request information includes positioning information. Coordinates of the key end are calculated according to coordinates of each of the multiple antenna modules in a preset coordinate system and the receiving moment for each of the multiple antenna modules, to implement positioning of the key end.

Optionally, the lock end includes a first antenna module, a second antenna module, and a third antenna module. The receiving moment for reception of the request information by each of the multiple antenna modules is calculated as follows. A first receiving moment $Ta$ for the first antenna module, a second receiving moment $Tb$ for the second antenna module, and a third receiving moment $Tc$ for the third antenna module are calculated respectively. The coordinates of the key end are calculated according to the coordinates of each of the multiple antenna modules in the preset coordinate system and the receiving moment for each of the multiple antenna modules as follows. A point in the lock end is taken as an origin, coordinates of the first antenna module are taken as $(Xa, Ya, Za)$, coordinates of the second antenna module are taken as $(Xb, Yb, Zb)$, and coordinates of the third antenna module are taken as $(Xc, Yc, Zc)$. Coordinates $(Xk, Yk, Zk)$ of the key end in the preset coordinate system are calculated according to the following formula:

$$|Ta\text{-}Tb|\times C=|\sqrt{(Xk-Xa)^2+(Yk-Ya)^2+(Zk-Za)^2}-\sqrt{(Xk-Xb)^2+(Yk-Yb)^2+(Zk-Zb)^2}|;$$

$$|Tb\text{-}Tc|\times C=|\sqrt{(Xk-Xb)^2+(Yk-Yb)^2+(Zk-Zb)^2}-\sqrt{(Xk-Xc)^2+(Yk-Yc)^2+(Zk-Zc)^2}|;$$

$$|Tc\text{-}Ta|\times C=|\sqrt{(Xk-Xc)^2+(Yk-Yc)^2+(Zk-Zc)^2}-\sqrt{(Xk-Xa)^2+(Yk-Ya)^2+(Zk-Za)^2}|;$$

where C is a propagation speed of a signal in air.

Optionally, the lock end further includes a control module. The control module is in communication connection with each of the multiple antenna modules via a cable. The receiving moment for reception of the request information by each of the multiple antenna modules is calculated as follows. An acquiring moment at which reception of the request information by each of the multiple antenna modules is acquired by the control module is recorded. The receiving moment T for each of the multiple antenna modules is calculated according to a length $L$ of the cable between the control module and each of the multiple antenna modules and the acquiring moment $T'$ and according to a formula $T = T' - L \div V_0$, where $V_0$ is a propagation speed of positioning information in the cable.

Optionally, the lock end is a vehicle. Each of the multiple antenna modules includes an interior antenna module and an exterior antenna module, the interior antenna module is positioned inside the vehicle, and the exterior antenna module is positioned outside the vehicle. The positioning method further includes the following. Whether the key end is positioned inside or outside the vehicle is determined according to the coordinates of the key end. The exterior antenna module is configured for communication connection with the key end when the key end is positioned outside the vehicle, and the interior antenna module is configured for communication connection with the key end when the key end is positioned inside the vehicle. When the key end is positioned outside the vehicle and a distance between the key end and the vehicle is within a preset range, the vehicle is enabled, according to the coordinates of the key end, to open a door closest to the key end. When the key end is positioned inside the vehicle and the key end is determined to be in a driving position, an engine of the vehicle is enabled.

Optionally, when the key end is positioned outside the vehicle and the distance between the key end and the vehicle is outside the preset range, the positioning method further includes the following. A living being is detected inside the vehicle. The living being is detected inside the vehicle as follows. First UWB information is sent by the interior antenna module. Second UWB information is received, where the second UWB information is UWB information to be reflected by an object in the lock end. Whether the living being exists in the lock end is determined according to the second UWB information.

A positioning apparatus is further provided in the second concept of the disclosure. The positioning apparatus is applied to a lock end, and includes a receiving module and an analyzing and calculating module. The receiving module includes multiple antenna modules and is configured to receive request information from a key end, where the request information includes positioning information. The analyzing and calculating module is configured to calculate a receiving moment for reception of the request information by each of the multiple antenna modules. The analyzing and calculating module is further configured to calculate, according to coordinates of each of the multiple antenna modules in a preset coordinate system and the receiving moment for each of the multiple antenna modules, coordinates of the key end to implement positioning of the key end.

Optionally, the receiving module includes a first antenna module, a second antenna module, and a third antenna module. The analyzing and calculating module is configured to calculate a first receiving moment $Ta$ for the first antenna module, a second receiving moment $Tb$ for the second antenna module, and a third receiving moment $Tc$ for the third antenna module respectively. The analyzing and calculating module is further configured to take a point in the lock end as an origin, coordinates of the first antenna module as ($Xa$, $Ya$, $Za$), coordinates of the second antenna module as ($Xb$, $Yb$, $Zb$), coordinates of the third antenna module as ($Xc$, $Yc$, $Zc$), and the coordinates of the key end as ($Xk$, $Yk$, $Zk$). The analyzing and calculating module is further configured to calculate the coordinates of the key end according to the following formula:

$$|Ta\text{-}Tb|\times C=|\sqrt{(Xk-Xa)^2+(Yk-Ya)^2+(Zk-Za)^2}-\sqrt{(Xk-Xb)^2+(Yk-Yb)^2+(Zk-Zb)^2}|;$$

$$|Tb\text{-}Tc|\times C=|\sqrt{(Xk-Xb)^2+(Yk-Yb)^2+(Zk-Zb)^2}-\sqrt{(Xk-Xc)^2+(Yk-Yc)^2+(Zk-Zc)^2}|;$$

$$|Tc\text{-}Ta|\times C=|\sqrt{(Xk-Xc)^2+(Yk-Yc)^2+(Zk-Zc)^2}-\sqrt{(Xk-Xa)^2+(Yk-Ya)^2+(Zk-Za)^2}|;$$

where C is a propagation speed of a signal in air.

Optionally, the analyzing and calculating module is further configured to record an acquiring moment at which reception of the request information by each of the multiple antenna modules is acquired. The analyzing and calculating module is further configured to calculate, according to a distance $L$ of a cable between the analyzing and calculating module and each of the multiple antenna modules and the acquiring moment $T'$, the receiving moment $T$ for each of the multiple antenna modules according to a formula $T = T' - L \div V_0$, where $V_0$ is a propagation speed of positioning information at the lock end.

Optionally, the lock end is a vehicle. Each of the multiple antenna modules includes an interior antenna module and an exterior antenna module, the interior antenna module is positioned inside the vehicle, the exterior antenna module is positioned outside the vehicle. The positioning apparatus is further configured to determine, according to the coordinates of the key end, whether the key end is positioned inside or outside the vehicle. The exterior antenna module is configured for communication connection with the key end when the key end is positioned outside the vehicle. The interior antenna module is configured for communication connection with the key end when the key end is positioned inside the vehicle. The positioning apparatus is configured to enable, according to the coordinates of the key end, the vehicle to open a door closest to the key end when the key end is positioned outside the vehicle and a distance between the key end and the vehicle is within a preset range; and enable an engine of the vehicle when the key end is positioned inside the vehicle and the key end is determined to be in a driving position.

Optionally, the positioning apparatus is further configured to a living being inside the vehicle when the key end is positioned outside the vehicle and the distance between the key end and the vehicle is outside the preset range. In terms of detecting the living being inside the vehicle, the interior antenna module is configured to send first UWB information. The interior antenna module is further configured to receive second UWB information, where the second UWB information is UWB information to be reflected by an object in the lock end. The analyzing and calculating module is further configured to determine, according to the second UWB information, whether the living being exists in the lock end.

A computer-readable storage medium is further provided in the second concept of the disclosure. The computer-readable storage medium is configured to store computer-executable program codes. The computer-executable program codes are configured to cause a computer to perform the positioning method based on the second concept.

A vehicle is further provided in the second concept of the disclosure. The vehicle includes a memory and a processor electrically connected with the memory. The memory is configured to store program codes executable by the processor, and the program codes which, when invoked and executed by the processor, are operable to perform the positioning method based on the second concept.

As such, in the positioning method based on the second concept of the disclosure, precision compensation for signal transmission inside the lock end is performed by calibrating signal-transmission time according to a cable length, and thus a moment at which the information is sent from the key end and a moment at which the information arrives at the lock end are obtained. In this way, a time-calculation error caused by time asynchronization between the control module and the antenna modules due to time loss during signal transmission via the cable will not occur, and thus a more precise time for propagation of the information between the lock end and the key end can be obtained, thereby improving the positioning precision.

BRIEF DESCRIPTION OF THE DRAWINGS

To describe technical solutions in embodiments of the disclosure more clearly, the following will give a brief introduction to the accompanying drawings used for describing the embodiments. Apparently, the accompanying drawings described below are merely some embodiments of the disclosure. Based on these drawings, those of ordinary skill in the art can also obtain other drawings without creative effort.

FIG. 1 is a schematic flowchart of a positioning method applied to a lock end according to an embodiment of a first aspect of the disclosure.

FIG. 2 is a schematic diagram illustrating repetitions of a positioning method applied to a lock end according to an embodiment of a first aspect of the disclosure.

FIG. 3 is a schematic flowchart of a positioning method for receiving information form a key end according to an embodiment of a first aspect of the disclosure.

FIG. 4 is a schematic flowchart of a positioning method applied to a key end according to an embodiment of a third aspect of the disclosure.

FIG. 5 is a schematic diagram illustrating repetitions of a positioning method applied to a key end according to an embodiment of a third aspect of the disclosure.

FIG. 6 is a schematic flowchart of a positioning method for receiving information from a lock end according to an embodiment of a third aspect of the disclosure.

FIG. 7 is a schematic diagram of an electronic device according to an embodiment of the disclosure.

FIG. 8 is a schematic flowchart illustrating calculation of a relative position of a key end relative to a lock end by the electronic device illustrated in FIG. 7.

FIG. 9 is a schematic diagram of a relationship between a vehicle and an electronic key according to an embodiment of the disclosure.

FIG. 10 is a schematic diagram of a relationship between a memory and a processor according to an embodiment of the disclosure.

FIG. 11 is a schematic flowchart of a positioning method applied to a lock end according to an embodiment of the disclosure.

FIG. 12 is a schematic flowchart illustrating selection of three antenna modules in the positioning method illustrated in FIG. 11.

FIG. 13 is a schematic flowchart illustrating a cable-length calibration algorithm in the positioning method illustrated in FIG. 11.

FIG. 14 is a schematic flowchart of a positioning method where a lock end is a vehicle according to an embodiment of the disclosure.

FIG. 15 is a schematic flowchart of a method for detecting a living being according to an embodiment of the disclosure.

FIG. 16 is a schematic flowchart illustrating calculation of a relative position of a key end relative to a lock end by a positioning apparatus according to an embodiment of the disclosure.

FIG. 17 is a schematic flowchart of an extension function developed by a positioning apparatus based on coordinates of a key end according to an embodiment of the disclosure.

FIG. 18 is a schematic diagram of a connection relationship between a vehicle and an electronic key according to an embodiment of the disclosure.

FIG. 19 is a schematic diagram of a connection relationship between a memory and a processor of the vehicle illustrated in FIG. 18.

Description of reference signs in an embodiment of a first concept: 100 - electronic device; 1 - trim glass; 2 - bracket; 3 - mounting point; 4 - pin; 5 - infrared emitter; 6 - image pick-up apparatus; 7 - display apparatus; 8 - proximity sensor; 9 - communication assembly; 200 - vehicle; 210 - processor; 220 - memory; 300 - electronic key.

Description of reference signs in an embodiment of a second concept: 100 - electronic key; 200 - vehicle; 210 - processor; 220 - memory.

DETAILED DESCRIPTION

The technical solutions in embodiments of the disclosure will be clearly and completely described below in conjunction with the accompanying drawings in the embodiments of the disclosure. Apparently, the described embodiments are merely some embodiments, rather than all embodiments, of the disclosure. All other embodiments obtained by those of ordinary skill in the art based on the embodiments of the disclosure without any creative effort shall fall within the scope of protection of the disclosure.

The terms such as "first" and "second" in the specification and the claims of the disclosure and in the accompanying drawings are intended to distinguish different objects, rather than to describe a specific order. In addition, the terms of "include" and "have" and any variations thereof are intended to cover the non-exclusive inclusion. For example, the process, method, system, product, or device, which includes a series of steps or units, is not limited to the listed steps or units, but optionally further includes unlisted steps or units, or optionally further includes other steps or units inherent to the process, method, product, or device.

The terms of "embodiment" or "implementation" mentioned herein means that the specific features, structures, or characteristics described with reference to the embodiments or implementations may be encompassed in at least one embodiment of the disclosure. The phrase at various locations in the specification does not necessarily refer to the same embodiment, or an independent or alternative embodiment exclusive of another embodiment. Those skilled in the art may understand explicitly and implicitly that the embodiments described herein may be combined with other embodiments.

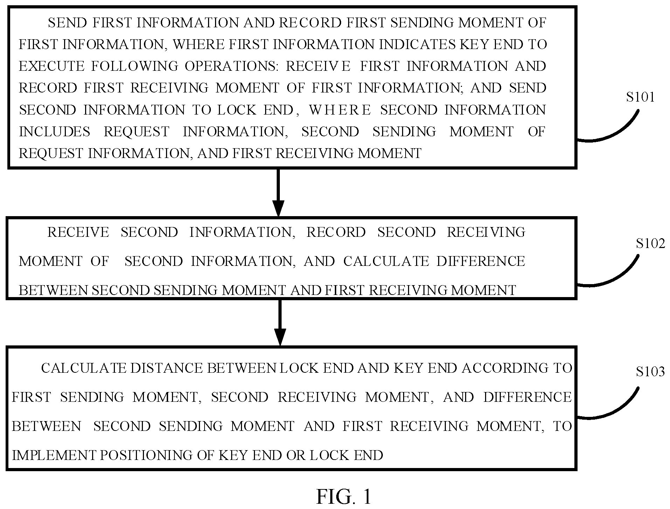

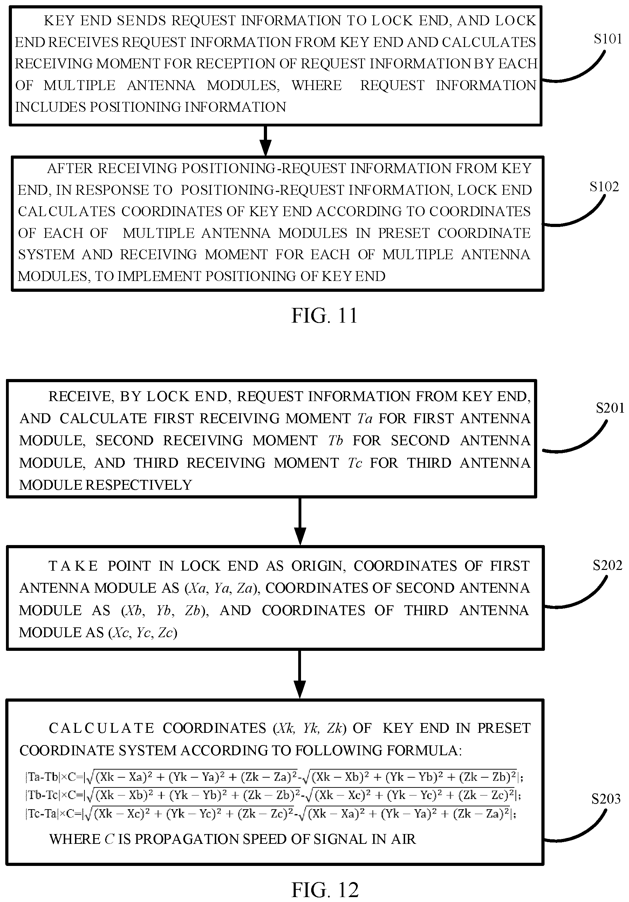

Positioning methods, positioning apparatuses, computer-readable storage media, and vehicles according to two concepts (a first concept and a second concept) are provided in the disclosure. FIG. 1 to FIG. 10 below in the disclosure illustrate different embodiments in the first concept, in which the same component is represented by the same sign and different components are represented by different signs. FIG. 11 to FIG. 19 below in the disclosure illustrate different embodiments in the second concept, in which the same component is represented by the same sign and different components are represented by different signs. In different concepts, the same sign may indicate different components, and different signs may be used for a component with the same name. When there are the same sequence numbers in flowcharts in the different concepts, corresponding functions in respective embodiments can be implemented through each operation under the guidance of the respective concept.

A positioning method, a positioning apparatus, a computer-readable storage medium, and a vehicle according to an embodiment of a first concept of the disclosure will be first introduced below. The positioning method according to the first concept of the disclosure can be used for positioning for environments such as vehicles, buildings, and access control.

As illustrated in FIG. 1, a positioning method according to an embodiment of a first aspect of the disclosure is applied to a lock end, and includes the following.

At S101, first information is sent and a first sending moment of the first information is recorded. The first information indicates a key end to execute the following operations: receiving the first information and recording a first receiving moment of the first information; and sending second information to the lock end. The second information includes request information, a second sending moment of the request information, and the first receiving moment.

Optionally, the lock end may be, but is not limited to, a lock such as a car door lock, a smart door lock, or a lock of another vehicle.

Optionally, the key end may be, but is not limited to, an electronic device with communication functions, such as a mobile phone, a tablet, a band, a smart watch, smart glasses, or a vehicle key.

Optionally, the lock end sends a positioning-request message, i.e., sends first information $Pa1$ to the key end, and records a current moment after sending, i.e., obtains a first sending moment $Ta1$ of the first information $Pa1$. The key end executes the following operations. The key end receives the first information $Pa1$, and records a receiving time as a first receiving moment $Tb1$ of the first information $Pa1$. Then, the key end packs reply information of the first information $Pa1$, and records as a second sending moment $Tb2$ a time when the packing is completed. Next, the key end packs the first receiving moment $Tb1$ and the second sending moment $Tb2$ together into the reply information, so as to obtain second information $Pb1$, and then sends the second information $Pb1$ to the lock end.

At S102, the second information is received, a second receiving moment of the second information is recorded, and a difference between the second sending moment and the first receiving moment is calculated.

Optionally, the lock end receives second information $Pb1$, records a current time, i.e., obtains a second receiving moment $Ta2$ of the second information $Pb1$, and obtains a first receiving moment $Tb1$ and a second sending moment $Tb2$ from the second information $Pb1$. The lock end calculates a difference $Tb21$ between the second sending moment $Tb2$ and the first receiving moment $Tb1$.

At S103, a distance between the lock end and the key end is calculated according to the first sending moment, the second receiving moment, and the difference between the second sending moment and the first receiving moment, to implement positioning of the key end or the lock end.

Optionally, the lock end calculates the distance S between the lock end and the key end by substituting the first sending moment $Ta1$, the second receiving moment $Ta2$, and the difference $Tb21$ between the second sending moment and the first receiving moment into a formula: $S=(Ta2-Ta1-Tb21)\times C\div2$. In the above, $C$ is a propagation speed of a signal in air.

In the above algorithm, timing, recording, and calculation of $Ta1$, $Ta2$, and $Tb21$ all take place in the same system, thereby avoiding a time-calculation error caused by time asynchronization between the lock end and the key end, and improving the positioning precision of an ultra-wideband (UWB) key.

The positioning method based on the first concept of the disclosure improves the interaction precision in algorithm. In the process of sending and receiving information, recording and calculation of time take place in the same timing system during positioning, and thus the transmission time of the information in the same device can be eliminated, so that a precise time for propagation of the information between the lock end and the key end can be obtained. Then, an average time is obtained through repeated measurements, and thus the time error is further reduced. In addition, a multipass average ranging algorithm is used for calculation, thereby improving the positioning precision.

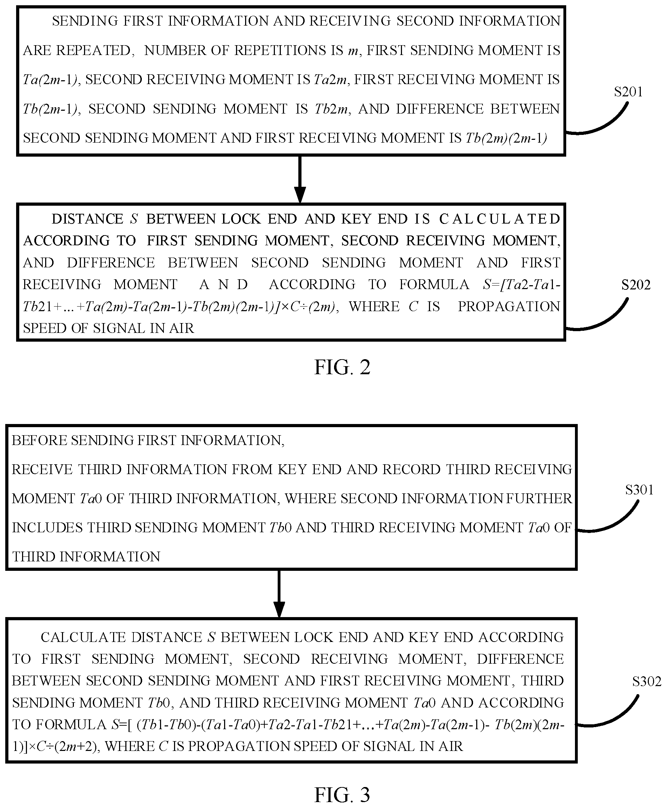

As illustrated in FIG. 2, in a possible embodiment, the positioning method according to the embodiment of the first aspect of the disclosure further includes the following.

At S201, sending the first information and receiving the second information are repeated. A number of repetitions is $m$, the first sending moment is $Ta(2m-1)$, the second receiving moment is $Ta2m$, the first receiving moment is $Tb(2m-1)$, the second sending moment is $Tb2m$, and the difference between the second sending moment and the first receiving moment is $Tb(2m)(2m-1)$.

At S202, the distance between the lock end and the key end is calculated according to the first sending moment, the second receiving moment, and the difference between the second sending moment and the first receiving moment, to implement positioning of the key end or the lock end as follows. The distance S between the lock end and the key end is calculated according to a formula $S=[Ta2-Ta1-Tb21+...+Ta(2m)-Ta(2m-1)-Tb(2m)(2m-1)]\times C\div(2m)$, where $C$ is a propagation speed of a signal in air.

Specifically, each repetition involves a time when the information is sent from the lock end to the key end, a time when the information runs inside the key end, and a time when the information is sent from the key end to the lock end. In the first one of repetitions, $Tb21$ is the time when the information runs inside the key end, $Ta2-Ta1-Tb21$ is the sum of the time when the information is sent from the lock end to the key end and the time when the information is sent from the key end to the lock end, and then the sum of the times is divided by 2 to obtain a time when the information runs once between the lock end and the key end. In the m-th repetition, $Tb(2m)(2m-1)$ is the time when the information runs inside the key end, $Ta(2m)-Ta(2m-1)-Tb(2m)(2m-1)$ is the sum of the time when the information is sent from the lock end to the key end and the time when the information is sent from the key end to the lock end, and then the sum of the times is divided by $2m$ to obtain an average time when the information runs once between the lock end and the key end.

In the above algorithm, recording and calculation of $Ta1, Ta2 ... Ta(2m)$, and $Tb1, Tb2 ... Tb(2m)$, and $Tb21 ... Tb(2m)(2m-1)$ all take place in the same timing system, thereby avoiding a time-calculation error caused by time asynchronization between the lock end and the key end. In addition, a multi-pass averaging method is used, and the greater the value of $m$ is, the higher the precision is, so that the positioning precision of the positioning technology described in the disclosure can be significantly improved. Optionally, when the number $m$ of repetitions is 3, the positioning precision of 10cm can be achieved.

As illustrated in FIG. 3. in a possible embodiment, for the positioning method according to the embodiment of the first aspect of the disclosure, before the first information is sent, the positioning method further includes the following.

At S301, third information is received from the key end and a third receiving moment $Ta0$ of the third information is recorded. The second information further includes a third sending moment $Tb0$ and the third receiving moment $Ta0$ of the third information.

At S302, the distance between the lock end and the key end is calculated to implement positioning of the key end or the lock end as follows. According to a formula

$$S=[(Tb1-Tb0)-(Ta1-Ta0)+Ta2-Ta1-Tb21+...+Ta(2m)-Ta(2m-1)-Tb(2m)(2m-1)]\times C \div (2m+2).$$

Optionally, before the lock end sends the first information, the key end packs request information for positioning, records as the third sending moment $Tb0$ a time when the packing is completed, obtains third information $Pb0$ by packing the third sending moment $Tb0$ into the request information for positioning, and then sends the third information $Pb0$ to the lock end. The key end packs the third sending moment $Tb0$, the first receiving moment $Tb1$, and the second sending moment $Tb2$ together to obtain second information $Pb1'$, and then sends the second information $Pb1'$ to the lock end. Specifically, $(Tb1-Tb0)$ is the sum of a time when the third information $Pb0$ is sent from the key end to the lock end, a time when the third information $Pb0$ runs inside the lock end, and a time when the third information $Pb0$ is sent from the lock end to the key end. $(Ta1-Ta0)$ is the time when the third information $Pb0$ runs inside the lock end. A time when the third information $Pb0$ runs once between the lock end and the key end can be obtained by dividing $(Tb1-Tb0)-(Ta1-Ta0)$ by 2. In this embodiment, for the positioning method, operations initiated by the key end are added, and another repetition path $(Tb1-Tb0)-(Ta1-Ta0)$ is added based on the formula $S=[Ta2-Ta1-Tb21+...+Ta(2m)-Ta(2m-1)-Tb(2m)(2m-1)]\times C \div (2m)$. Finally, the number of repetitions becomes $(m+1)$, and the dividing number of signal round-trips is also changed from $2m$ to $2(m+1)$, i.e., $(2m+2)$.

In this embodiment, the positioning method applied to the lock end is initiated by the key end, and the distance between the lock end and the key end can be calculated according to the formula.

In a possible embodiment, for the positioning method according to the embodiment of the first aspect of the disclosure, the lock end includes $P$ positioning modules, $P \geq 3$, and the positioning method further includes the following. A distance between the key end and each of the $P$ positioning modules in the lock end is calculated. The key end is positioned according to the distance between the key end and each of the $P$ positioning modules.

Specifically, according to the algorithm described in the embodiment of the first aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

Optionally, for the $P$ positioning modules, $3 \leq P \leq 8$. Optionally, the positioning modules are electrically connected via a local interconnect network (LIN).

In a possible embodiment, a positioning method according to an embodiment of a second aspect of the disclosure is applied to a key end, and includes the following. First information is received from a lock end and a first receiving moment of the first information is recorded. Second information is sent to the lock end. The second information includes request information, a second sending moment of the request information, and the first receiving moment. The second information indicates the lock end to execute the following operations: receiving the second information, recording a second receiving moment of the second information, and calculating a difference between the second sending moment and the first receiving moment; and calculating a distance between the lock end and the key end according to a first sending moment of the first information, the second receiving moment, and the difference between the second sending moment and the first receiving moment, to implement positioning of the key end or the lock end.

In a possible embodiment, for the positioning method according to the embodiment of the second aspect of the disclosure, receiving the first information from the lock end and sending the second information to the lock end are repeated. A number of repetitions is $m$, the first sending moment is $Ta(2m-1)$, the second receiving moment is $Ta2m$, the first receiving moment is $Tb(2m-1)$, the second sending moment is $Tb2m$, and the difference between the second sending moment and the first receiving moment is $Tb(2m)(2m-1)$. The distance between the lock end and the key end is calculated by the lock end according to the first sending moment, the second receiving moment, and the difference between the second sending moment and the first receiving moment, to implement positioning of the key end or the lock end as follows. The distance S between the lock end and the key end is calculated according to a formula $S=[Ta2-Ta1-Tb21+...+Ta(2m)-Ta(2m-1)-Tb(2m)(2m-1)]\times C \div(2m)$, where $C$ is a propagation speed of a signal in air.

In a possible embodiment, for the positioning method according to the embodiment of the second aspect of the disclosure, before the first information is received from the lock end, the positioning method further includes the following. Third information is sent and a third sending moment $Tb0$ of the third information is recorded, where the second information further includes the third sending moment $Tb0$ and a third receiving moment $Ta0$ of the third information. The distance between the lock end and the key end is calculated to implement positioning of the key end or the lock end as follows. According to a formula $S=[(Tb1-Tb0)-(Ta1-Ta0)+Ta2-Ta1-Tb21+...+Ta(2m)-Ta(2m-1)-Tb(2m)(2m-1)]\times C \div(2m+2)$.

In a possible embodiment, for the positioning method according to the embodiment of the second aspect of the disclosure, the lock end includes $P$ positioning modules, $P \geq 3$, and the positioning method further includes the following. A distance between the key end and each of the $P$ positioning modules in the lock end is calculated. The key end is positioned according to the distance between the key end and each of the $P$ positioning modules.

Specifically, according to the algorithm described in the embodiment of the second aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

Optionally, for the $P$ positioning modules, $3 \leq P \leq 8$. Optionally, the positioning modules are electrically connected via an LIN.

For detailed descriptions, reference can be made to the above embodiments of the disclosure, which will not be repeated herein.

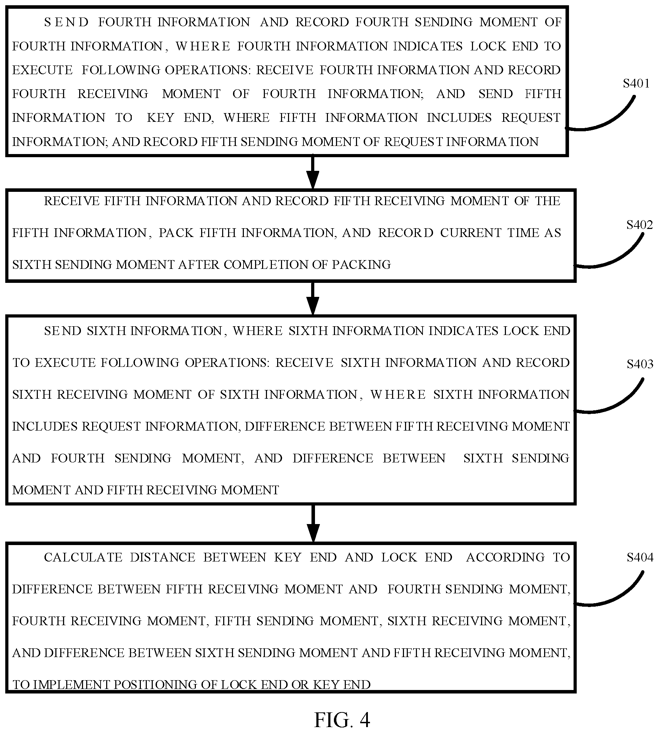

As illustrated in FIG. 4, a positioning method according to an embodiment of a third aspect of the disclosure is applied to a key end, and includes the following.

At S401, fourth information is sent and a fourth sending moment of the fourth information is recorded. The fourth information indicates a lock end to execute the following operations: receiving the fourth information and recording a fourth receiving moment of the fourth information; and sending fifth information to the key end, where the fifth information includes request information; and recording a fifth sending moment of the request information.

Optionally, the key end may be, but is not limited to, an electronic device with communication functions, such as a mobile phone, a tablet, a band, a smart watch, or smart glasses.

Optionally, the lock end may be, but is not limited to, a lock such as a car door lock, a smart door lock, or a lock of another vehicle.

Optionally, the key end sends a positioning-request message, i.e., sends fourth information $Pa1$ to the lock end, and records a current moment after sending, i.e., obtains a fourth sending moment $Ta1$. The lock end executes the following operations. The lock end receives the fourth information $Pa1$, and records a receiving time, i.e., obtains a fourth receiving moment $Tb1$ of the fourth information $Pa1$. The lock end sends the fifth information to the key end, where the fifth information includes request information. The lock end records the fifth sending moment $Tb2$ of the request information.

At S402, the fifth information is received and a fifth receiving moment of the fifth information is recorded, the fifth information is packed, and a current time is recorded as a sixth sending moment after completion of packing.

Optionally, the key end receives fifth information $Pa2$ from the lock end, and records a fifth receiving moment $Ta2$ of the fifth information $Pa2$, packs the fifth information $Pa2$, and records a current time Ta3 after completion of packing. In addition, the key end starts to calculate a difference $Ta21$ between $Ta2$ and $Ta1$ and a difference $Ta32$ between $Ta3$ and $Ta2$, packs the values of $Ta32$ and $Ta21$ together into the fifth information $Pa2$, and then sends the fifth information $Pa2$ to the lock end.

At S403, sixth information is sent. The sixth information indicates the lock end to execute the following operations: receiving the sixth information and recording a sixth receiving moment of the sixth information. The sixth information includes request information, a difference between the fifth receiving moment and the fourth sending moment, and a difference between the sixth sending moment and the fifth receiving moment.

Optionally, the key end sends to the lock end sixth information $Pa3$, and a sixth receiving moment $Tb3$ of the sixth information. The sixth information $Pa3$ further includes a sixth sending moment $Ta3$, the difference $Ta21$ between the fifth receiving moment $Ta2$ and the fourth sending moment $Ta1$, and the difference $Ta32$ between the sixth sending moment and the fifth receiving moment.

At S404, a distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end.

Optionally, after receiving sixth information $Pa3$, the lock end calculates the distance S between the lock end and the key end by substituting the difference $Ta21$ between the fifth receiving moment $Ta2$ and the fourth sending moment $Ta1$ and the difference $Ta32$ between the sixth sending moment and the fifth receiving moment that are obtained from the sixth information $Pa3$, as well as the fourth receiving moment $Tb1$, the fifth sending moment $Tb2,$ and the sixth receiving moment $Tb3$ into the formula: $S=[Ta21-(Tb2-Tb1)+(Tb3-Tb2)-Ta32]\times C\div 4$. In the above, C is a propagation speed of a signal in air.

In the above algorithm, timing, recording, and calculation of $Ta1$, $Ta2$, and $Tb21$ all take place in the same system, thereby avoiding a time-calculation error caused by time asynchronization between the lock end and the key end, and improving the positioning precision of a UWB key.

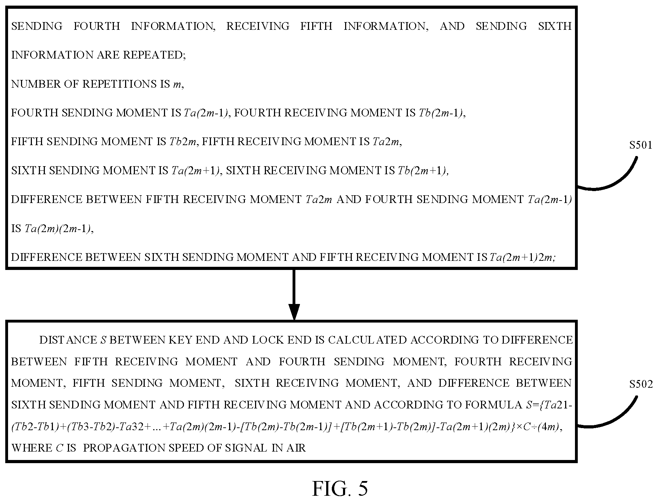

As illustrated in FIG. 5, in a possible embodiment, the positioning method according to the embodiment of the third aspect of the disclosure further includes the following.

At S501, sending the fourth information, receiving the fifth information, and sending the sixth information are repeated. A number of repetitions is $m,$ the fourth sending moment is $Ta(2m-1)$, the fourth receiving moment is $Tb(2m-1),$ the fifth sending moment is $Tb2m$, the fifth receiving moment is $Ta2m$, the sixth sending moment is $Ta(2m+1)$, the difference between the fifth receiving moment $Ta2m$ and the fourth sending moment $Ta(2m-1)$ is $Ta(2m)(2m-1)$, the difference between the sixth sending moment and the fifth receiving moment is $Ta(2m+1)2m$, and the sixth receiving moment is $Tb(2m+1)$.

At S502, the distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end as follows. The distance S between the lock end and the key end is calculated according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C\div(4m)$, where $C$ is a propagation speed of a signal in air.

Specifically, each repetition involves a time when the fourth information is sent from the key end to the lock end, a time when the fourth information runs inside the lock end, a time when the fifth information is sent from the lock end to the key end, a time when the fifth information runs inside the key end, and a time when the sixth information is sent from the key end to the lock end.

In the first one of repetitions, $(Tb2-Tb1)$ is the time when the fourth information runs inside the lock end, and $Ta21-(Tb2-Tb1)$ is the sum of the time when the fourth information is sent from the key end to the lock end and the time when the fifth information is sent from the lock end to the key end. $Ta32$ is the time when the fifth information runs inside the key end, and $(Tb3-Tb2)-Ta32$ is the sum of the time when the fifth information is sent from the lock end to the key end and the time when the sixth information is sent from the key end to the lock end. $Ta21-(Tb2-Tb1)+(Tb3-Tb2)-Ta32$ is the time for one repetition, and then is divided by 4 to obtain a time when the information runs once between the lock end and the key end. In the $m$-th repetition, $[Tb(2m)-Tb(2m-1)]$ is the time when the fourth information runs inside the lock end, and $Ta(2m)(2m-1)-[Tb(2m)-Tb(2m-1)]$ is the sum of the time when the fourth information is sent from the key end to the lock end and the time when the fifth information is sent from the lock end to the key end. $Ta(2m+1)(2m)$ is the time when the fifth information runs inside the key end, and $[Tb(2m+1)-Tb(2m)]-Ta(2m+1)(2m)$ is the sum of the time when the fifth information is sent from the lock end to the key end and the time when the sixth information is sent from the key end to the lock end. $Ta(2m)(2m-1)-[Tb(2m)-Tb(2m-1)]+[Tb(2m+1)-Tb(2m)]-Ta(2m+1)(2m)$ is the time for one repetition, and then is divided by $4m$ to obtain a time when the information runs once between the lock end and the key end.

In the above algorithm, recording and calculation of $Ta1$, $Ta2 ... Ta(2m+1)$, and $Tb1$, $Tb2 ... Tb(2m+1),$ and $Tb21 ...Tb(2m+1)(2m)$ all take place in the same timing system, thereby avoiding a time-calculation error caused by time asynchronization between the lock end and the key end. In addition, a multi-pass averaging method is used, and the greater the value of $m$ is, the higher the precision is, so that the positioning precision of the positioning technology described in the disclosure can be significantly improved. Optionally, when the number $m$ of repetitions is 2, the positioning precision of 10cm can be achieved.

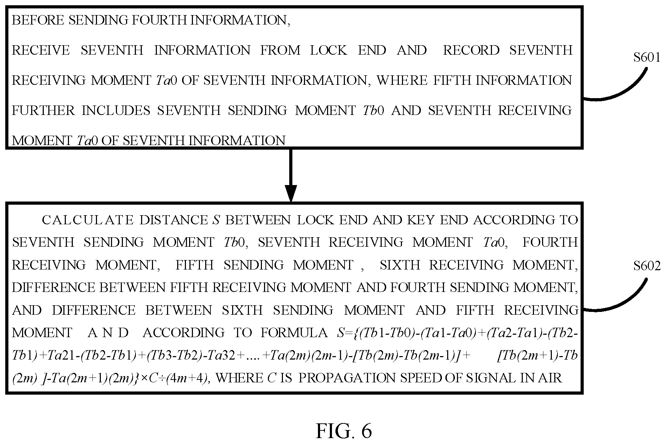

As illustrated in FIG. 6. in a possible embodiment, for the positioning method according to the embodiment of the third aspect of the disclosure, before the fourth information is sent, the positioning method further includes the following.

At S601, seventh information is received from the lock end and a seventh receiving moment $Ta0$ of the seventh information is recorded. The fifth information further includes a seventh sending moment $Tb0$ and the seventh receiving moment $Ta0$ of the seventh information.

At S602, the distance between the lock end and the key end is calculated according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, to implement positioning of the key end or the lock end as follows. According to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C\div(4m+4)$.

Optionally, before the key end sends the fourth information, the lock end packs request information for positioning, records as the seventh sending moment $Tb0$ a time when the packing is completed, obtains the fourth information $Pb0$ by packing the seventh sending moment $Tb0$ into the request information for positioning, and then sends

the fourth information $Pb0$ to the key end. Specifically, $(Ta1-Ta0)$ is a time when the seventh information $Pb0$ runs inside the lock end, and $(Tb1-Tb0)-(Ta1-Ta0)$ is the sum of a time when the seventh information $Pb0$ is sent from the key end to the lock end and a time when the seventh information $Pb0$ is sent from the lock end to the key end. $(Tb2-Tb1)$ is the time when the information runs inside the lock end, and $(Ta2-Ta1)-(Tb2-Tb1)$ is the sum of the time when the information is sent from the key end to the lock end and the time when the information is sent from the lock end to the key end. As such, a time when the information runs once between the lock end and the key end can be obtained by dividing $(Tb1-Tb0)-(Ta1-Ta0)+(Ta2-Ta1)-(Tb2-Tb1)$ by 4. In this embodiment, for the positioning method, operations initiated by the lock end are added, and another repetition path $(Tb1-Tb0)-(Ta1-Ta0)+(Ta2-Ta1)-(Tb2-Tb1)$ is added based on the formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb\ (2m)\ ]-Ta(2m+1)(2m)\}\times C\div(4m)$. Finally, the number of repetitions becomes $(m+1)$, and the dividing number of signal round-trips is also changed from 4m to $4(m+1)$, i.e., $(4m+4)$.

In this embodiment, the positioning method applied to the key end is initiated by the lock end, and the distance between the lock end and the key end can be calculated according to the formula.

In a possible embodiment, for the positioning method according to the embodiment of the third aspect of the disclosure, the lock end includes $P$ positioning modules, $P\geq3$, and the positioning method further includes the following. A distance between the key end and each of the $P$ positioning modules in the lock end is calculated. The key end is positioned according to the distance between the key end and each of the $P$ positioning modules in the lock end.

Optionally, for the $P$ positioning modules, $3\leq P\leq8$. Optionally, the positioning modules are electrically connected via an LIN.

Specifically, according to the algorithm described in the embodiment of the third aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

A positioning method according to an embodiment of a fourth aspect of the disclosure is applied to a lock end, and includes the following. Fourth information is received from a key end and a fourth receiving moment of the fourth information is recorded. Fifth information is sent to the key end and a fifth sending moment of the fifth information is recorded. The fifth information includes request information, and the fifth information indicates the key end to execute the following operations: receiving the fifth information and recording a fifth receiving moment of the fifth information, packing the fifth information, and recording a current time as a sixth sending moment after completion of packing; and calculating a difference between the fifth receiving moment of the fifth information and a fourth sending moment of the fourth information and the difference between the fifth receiving moment of the fifth information and the fourth sending moment of the fourth information, and sending sixth information to the lock end. The sixth information is received from the key end and a sixth receiving moment of the sixth information is recorded, where the sixth information includes request information, the difference between the fifth receiving moment and the fourth sending moment, and a difference between the sixth sending moment and the fifth receiving moment. A distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end.

In a possible embodiment, for the positioning method according to the embodiment of the fourth aspect of the disclosure, receiving the fourth information from the key end, sending the fifth information, and receiving the sixth information from the key end are repeated. A number of repetitions is $m,$ the fourth sending moment is $Ta(2m-1)$, the fourth receiving moment is $Tb(2m-1),$ the fifth sending moment is $Tb2m$, the fifth receiving moment is $Ta2m$, the sixth sending moment is $Ta(2m+1)$, the difference between the fifth receiving moment $Ta2m$ and the fourth sending moment $Ta(2m-1)$ is $Ta2m(2m-1)$, the difference between the sixth sending moment and the fifth receiving moment is $Ta(2m+1)2m$, and the sixth receiving moment is $Tb(2m+1)$. The distance between the key end and the lock end is calculated according to the difference between the fifth receiving moment and the fourth sending moment, the fourth receiving moment, the fifth sending moment, the sixth receiving moment, and the difference between the sixth sending moment and the fifth receiving moment, to implement positioning of the lock end or the key end as follows. The distance S between the lock end and the key end is calculated according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb\ (2m)\ ]-Ta(2m+1)(2m)\}\times C\div(4m)$, where $C$ is a propagation speed of a signal in air.

In a possible embodiment, for the positioning method according to the embodiment of the fourth aspect of the disclosure, before the fourth information is received from the key end, the positioning method further includes the following. Seventh information is sent and a seventh sending moment $Tb0$ of the seventh information is recorded, where the fifth information further includes the seventh sending moment $Tb0$ and a seventh receiving moment $Ta0$ of the seventh information. The distance between the lock end and the key end is calculated according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, to implement positioning of the key end or the lock end as follows. According to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C\div(4m+4)$.

In a possible embodiment, for the positioning method according to the embodiment of the fourth aspect of the disclosure, the lock end includes $P$ positioning modules, $P\geq3$, and the positioning method further includes the following. A distance between the key end and each of the $P$ positioning modules in the lock end is calculated. The key end is positioned according to the distance between the key end and each of the $P$ positioning modules in the lock end.

Optionally, for the $P$ positioning modules, $3\leq P\leq8$. Optionally, the positioning modules are electrically connected via an LIN.

Specifically, according to the algorithm described in the embodiment of the fourth aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

For detailed descriptions, reference can be made to the above embodiments of the disclosure, which will not be repeated herein.

In a possible embodiment, in this disclosure, coordinates of the key end are positioned according to the distance between the key end and each positioning module in the lock end. The specific operations are as follows.

At S701, a point in a carrier of the lock end is first selected and calibrated as the origin O, with coordinates (0, 0, 0).

At S702, the positioning modules in the lock end are respectively referred to as a first positioning module, a second positioning module, and a third positioning module. A position of the first positioning module is calibrated as *A,* with coordinates (X1, Y1, Z1). A position of the second positioning module is calibrated as *B,* with coordinates (X2, Y2, Z2). A position of the third positioning module is calibrated as *C,* with coordinates (X3, Y3, Z3). A position of a fourth positioning module is calibrated as *D,* with coordinates (X4, Y4, Z4).

Specifically, after the origin *O* is calibrated, coordinate positions of point *A,* point *B,* point *C,* and point *D* are all known.

Optionally, the lock end includes $P$ positioning modules, and $P\geq3$. Similarly, the positioning modules in the lock end may be referred to as the first positioning module, the second positioning module, ..., and the $P$-th positioning module, respectively. Coordinates of the P-th positioning module are *(Xp, Yp, Zp)*. The greater the value of $P$ is, the higher the precision of the calculated position is. Optionally, when $P=4$, the positioning precision of 10cm can be achieved.

At S703, a position of the key end is set as point K, and coordinates of the key end are set as *(Xk, Yk,* Zk). A distance between point *K* of the key end and point *A* of the first positioning module is |*KA*|, a distance between point *K* of the key end and point *B* of the second positioning module is |*KB*|, a distance between point *K* of the key end and point C of the third positioning module is |*KC*|, and a distance between point *K* of the key end and point *D* of the fourth positioning module is |*KD*|. *Xk, Yk,* and *Zk* may be calculated according to the following equations.

$$|KA|^2=(Xk-X1)^2+(Yk-Y1)^2+(Zk-Z1)^2;$$

$$|KB|^2=(Xk-X2)^2+(Yk-Y2)^2+(Zk-Z2)^2;$$

$$|KC|^2=(Xk-X3)^2+(Yk-Y3)^2+(Zk-Z3)^2;$$

$$|KD|^2=(Xk-X4)^2+(Yk-Y4)^2+(Zk-Z4)^2.$$

Specifically, |*KA*|, |*KB*|, |*KC*|, |*KD*| are calculated based on the positioning method in the embodiment of the first aspect described in the disclosure or based on the positioning method in the embodiment of the second aspect described in the disclosure.

A positioning apparatus is provided in an embodiment of a fifth aspect of the disclosure. The positioning apparatus is applied to a lock end, and includes a first sending module, a first receiving module, and a first calculating module. The first sending module is configured to send first information to a key end and record a first sending moment of the first information. The first information indicates the key end to execute the following operations: receiving the first information and recording a first receiving moment of the first information; sending second information to the lock end, where the second information includes request information, a second sending moment of the request information, and the first receiving moment. The first receiving module is configured to receive the second information from the key end and record a second receiving moment of the second information. The first calculating module is configured to calculate a difference between the second sending moment and the first receiving moment; and calculate, according to the first sending moment, the second receiving moment, and the difference between the second sending moment and the first receiving moment, a distance between the positioning apparatus and the key end to implement positioning of the lock end or the key end.

Optionally, the lock end sends a positioning-request message, i.e., sends first information $Pa1$ to the key end and records a current moment after sending, i.e., obtains a first sending moment $Ta1$ of the first information $Pa1$. The key end executes the following operations. The key end receives the first information $Pa1$, and records a receiving time as a first receiving moment $Tb1$ of the first information $Pa1$. Then, the key end packs reply information of the first information $Pa1$, and records as a second sending moment $Tb2$ a time when the packing is completed. Next, the key end packs the first receiving moment $Tb1$ and the second sending moment $Tb2$ together into the reply information, so as to obtain second information $Pb1$, and then sends the second information $Pb1$ to the lock end. The lock end receives the second information $Pb1$, records a current time, i.e., obtains a second receiving moment $Ta2$ of the second information $Pb1$, and obtains the first receiving moment $Tb1$ and the second sending moment $Tb2$ from the second information $Pb1$. The lock end calculates a difference $Tb21$ between the second sending moment $Tb2$ and the first receiving moment $Tb1$.

The lock end calculates the distance S between the lock end and the key end by substituting the first sending moment $Ta1$, the second receiving moment $Ta2$, and the difference $Tb21$ between the second sending moment and the first receiving moment into a formula: $S=(Ta2-Ta1-Tb21)\times C\div2$. In the above, $C$ is a propagation speed of a signal in air. The first sending moment is referred to as $Ta1$, the second receiving moment is referred to as $Ta2$, and the difference between the second sending moment and the first receiving moment is referred to as $Tb21$.

In a possible embodiment, in the positioning apparatus described in the embodiment of the fifth aspect of the disclosure, the first sending module is configured to repeatedly send the first information, and the first receiving module is configured to repeatedly receive the second information in a synchronous manner. A number of repetitions is $m$, the first sending moment is $Ta(2m-1)$, the second receiving moment is $Ta2m$, the first receiving moment is $Tb(2m-1)$, the second sending moment is $Tb2m$, and the difference between the second sending moment and the first receiving moment is $Tb(2m)(2m-1)$. In terms of calculating, according to the first sending moment, the second receiving moment, and the difference between the second sending moment and the first receiving moment, the distance between the positioning apparatus and the key end to implement positioning of the key end or the lock end, the first calculating module is configured to calculate the distance $S$ between the lock end and the key end according to a formula $S=[Ta2-Ta1-Tb21+...+Ta(2m)-Ta(2m-1)-Tb(2m)(2m-1)]\times C\div(2m)$, where $C$ is a propagation speed of a signal in air.

Specifically, each repetition involves a time when the information is sent from the sending module to the key end, a time when the information runs inside the key end, and a time when the information is sent from the key end to the receiving module. In the first one of repetitions, $Tb21$ is the time when the information runs inside the key end, $Ta2-Ta1-Tb21$ is a time when the information is sent from the lock end to the key end to the lock end, and then the time is divided by 2 to obtain a time when the information runs once between the lock end and the key end. In the m-th repetition, $Tb(2m)(2m-1)$ is the time when the information runs inside the key end, $Ta(2m)-Ta(2m-1)-Tb(2m)(2m-1)$ is the sum of the time when the information is sent from the lock end to the key end and the time when the information is sent from the key end to the lock end, and then the sum of the times is divided by 2m to obtain an average time when the information runs once between the lock end and the key end.

In the above algorithm, recording and calculation of $Ta1$, $Ta2$ ... $Ta(2m)$, and $Tb1$, $Tb2$ ... $Tb(2m)$, and $Tb21$ ... $Tb(2m)(2m-1)$ all take place in the same timing system, thereby avoiding a time-calculation error caused by time asynchronization between the lock end and the key end. In addition, a multi-pass averaging method is used, and the greater the value of $m$ is, the higher the precision is, so that the positioning precision of the positioning technology described in the disclosure can be significantly improved. Optionally, when the number $m$ of repetitions is 3, the positioning precision of 10cm can be achieved.

In a possible embodiment, in the positioning apparatus described in the embodiment of the fifth aspect of the disclosure, the first receiving module is further configured to receive third information from the key end and record a third receiving moment $Ta0$ of the third information before the first sending module sends the first information. The second information further includes a third sending moment $Tb0$ and the third receiving moment $Ta0$ of the third information. In terms of calculating the distance between the lock end and the key end to implement positioning of the key end or the lock end, the first calculating module is configured to calculate the distance S between the lock end and the key end according to a formula

$$S=[\,(Tb1-Tb0)-(Ta1-Ta0)+Ta2-Ta1-Tb21+...+Ta(2m)-Ta(2m-1)-Tb(2m)(2m-1)]\times C\div(2m+2),$$

where $C$ is a propagation speed of a signal in air.

Optionally, before the sending module sends the first information, the key end packs request information for positioning, records as the third sending moment $Tb0$ a time when the packing is completed, obtains third information $Pb0$

by packing the third sending moment $Tb0$ into the request information for positioning, and then sends the third information $Pb0$ to the receiving module. The key end packs the third sending moment $Tb0$, the first receiving moment $Tb1$, and the second sending moment $Tb2$ together to obtain second information $Pb1'$, and then sends the second information $Pb1'$ to the receiving module. Specifically, $(Tb1\text{-}Tb0)$ is the sum of a time when the third information $Pb0$ is sent from the key end to the receiving module, a time when the third information $Pb0$ runs inside the positioning apparatus, and a time when the third information $Pb0$ is sent from the sending module to the key end. $(Ta1\text{-}Ta0)$ is the time when the third information $Pb0$ runs inside the lock end. A time when the third information $Pb0$ runs once between the lock end and the key end can be obtained by dividing $(Tb1\text{-}Tb0)\text{-}(Ta1\text{-}Ta0)$ by 2. In this embodiment, for the positioning apparatus, a feature of initiation by the key end is added, and another repetition path $(Tb1\text{-}Tb0)\text{-}(Ta1\text{-}Ta0)$ is added based on the formula $S=[Ta2\text{-}Ta1\text{-}Tb21+...+Ta(2m)\text{-}Ta(2m\text{-}1)\text{-}Tb(2m)(2m\text{-}1)]\times C\div(2m)$. Finally, the number of repetitions becomes $(m+1)$, and the dividing number of signal round-trips is also changed from $2m$ to $2(m+1)$, i.e., $(2m+2)$.

In a possible embodiment, the positioning apparatus described in the embodiment of the fifth aspect of the disclosure further includes $P$ positioning modules, and $P\geq3$. The first calculating module is further configured to calculate a distance between the key end and each of the $P$ positioning modules in the positioning apparatus, and position the key end according to the distance between the key end and each of the $P$ positioning modules.

Optionally, for the $P$ positioning modules, $3\leq P\leq8$. Optionally, the positioning modules are electrically connected via an LIN.

Optionally, the positioning modules are electrically connected via the LIN.

Specifically, according to the algorithm described in the embodiment of the fifth aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

Optionally, a power-consumption current of the lock end is less than 0.1mA, and a power-consumption current of the positioning module is less than 0.05mA.

A positioning apparatus is provided in an embodiment of a sixth aspect of the disclosure. The positioning apparatus is applied to a key end, and includes a second receiving module and a second sending module. The second receiving module is configured to receive first information from a lock end and record a first receiving moment of the first information. The second sending module is configured to send second information to the lock end. The second information includes request information, a second sending moment of the request information, and the first receiving moment. The second information indicates the lock end to execute the following operations: receiving the second information, recording a second receiving moment of the second information, and calculating a difference between the second sending moment and the first receiving moment; and calculating a distance between the lock end and the positioning apparatus according to the first sending moment of the first information, the second receiving moment, and the difference between the second sending moment and the first receiving moment, to implement positioning of the key end or the lock end.

In a possible embodiment, in the positioning apparatus described in the embodiment of the sixth aspect of the disclosure, the second receiving module is configured to repeatedly receive the first information from the lock end, and repeatedly send second information to the lock end in a synchronous manner. A number of repetitions is $m$, the first sending moment is $Ta(2m\text{-}1)$, the second receiving moment is $Ta2m$, the first receiving moment is $Tb(2m\text{-}1)$, the second sending moment is $Tb2m$, and the difference between the second sending moment and the first receiving moment is $Tb(2m)(2m\text{-}1)$. In terms of calculating, according to the first sending moment, the second receiving moment, and the difference between the second sending moment and the first receiving moment, the distance between the lock end and the positioning apparatus to implement positioning of the key end or the lock end, the lock end is configured to calculate the distance S between the lock end and the positioning apparatus according to a formula $S=[Ta2\text{-}Ta1\text{-}Tb21+...+Ta(2m)\text{-}Ta(2m\text{-}1)\text{-}Tb(2m)(2m\text{-}1)]\times C\div(2m)$, where $C$ is a propagation speed of a signal in air.

In a possible embodiment, in the positioning apparatus described in the embodiment of the sixth aspect of the disclosure, the second sending module is further configured to send third information to the lock end and record a third sending moment $Tb0$ of the third information before the positioning apparatus receives the first information from the lock end. The second information further includes the third sending moment $Tb0$ and a third receiving moment $Ta0$ of the third information. In terms of calculating the distance between the lock end and the positioning apparatus to implement positioning of the key end or the lock end, the lock end is configured to: according to a formula $S=[(Tb1\text{-}Tb0)\text{-}(Ta1\text{-}Ta0)+Ta2\text{-}Ta1\text{-}Tb21+...+Ta(2m)\text{-}Ta(2m\text{-}1)\text{-}Tb(2m)(2m\text{-}1)]\times C\div(2m+2)$.

In a possible embodiment, for the positioning apparatus described in the embodiment of the sixth aspect of the disclosure, the lock end further includes $P$ positioning modules, and $P\geq3$. The lock end is further configured to calculate a distance between the positioning apparatus and each of the $P$ positioning modules in the lock end, and position the key end according to the distance between the positioning apparatus and each of the $P$ positioning modules.

Optionally, for the $P$ positioning modules, $3\leq P\leq8$. Optionally, the positioning modules are electrically connected via an LIN.

Optionally, the positioning modules are electrically connected via the LIN.

Specifically, according to the algorithm described in the embodiment of the sixth aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

Optionally, a power-consumption current of the lock end is less than 0.1mA, and a power-consumption current of the positioning module is less than 0.05mA.

For detailed descriptions, reference can be made to the above embodiments of the disclosure, which will not be repeated herein.

A positioning apparatus is provided in an embodiment of a seventh aspect of the disclosure. The positioning apparatus is applied to a key end, and includes a third sending module, a third receiving module, and a third calculating module. The third sending module is configured to send fourth information to a lock end and record a fourth sending moment of the fourth information. The fourth information indicates the lock end to execute the following operations: receiving the fourth information, recording a fourth receiving moment of the fourth information, and sending fifth information to the key end, where the fifth information includes request information; and recording a fifth sending moment of the request information. The third receiving module is configured to receive the fifth information from the lock end and record a fifth receiving moment of the fifth information, pack the fifth information, and record a current time as a sixth sending moment after completion of packing. The third sending module is further configured to send sixth information to the lock end. The sixth information indicates the lock end to execute the following operations: receiving the sixth information and recording a sixth receiving moment of the sixth information, where the sixth information includes request information, a difference between the fifth receiving moment and the fourth sending moment, and a difference between the sixth sending moment and the fifth receiving moment. The third calculating module is configured to calculate the difference between the fifth receiving moment and the fourth sending moment and the difference between the sixth sending moment and the fifth receiving moment. The lock end is configured to calculate, according to the difference between the fifth receiving moment and the fourth sending moment, the fourth receiving moment, the fifth sending moment, the sixth receiving moment, and the difference between the sixth sending moment and the fifth receiving moment, a distance between the positioning apparatus and the lock end to implement positioning of the lock end or the key end.

Specifically, the sending module is configured to send the fourth information and record a fourth sending moment $Ta1$ of the fourth information. The fourth information indicates the lock end to execute the following operations: receiving the fourth information, recording a fourth receiving moment $Tb1$ of the fourth information, and sending fifth information to the key end, where the fifth information includes request information; and recording a fifth sending moment $Tb2$ of the request information. The receiving module is configured to receive the fifth information and record a fifth receiving moment $Ta2$ of the fifth information, pack the fifth information, and record a current time as a sixth sending moment $Ta3$ after completion of packing. The sending module is configured to send sixth information. The sixth information includes request information, a difference $Ta21$ between the fifth receiving moment $Ta2$ and the fourth sending moment $Ta1$, and a difference $Ta32$ between the sixth sending moment and the fifth receiving moment, where $Ta21$ and $Ta32$ are calculated by the calculating module. The lock end receives the sixth information and records a sixth receiving moment $Tb3$ of the sixth information. The lock end calculates, according to the difference $Ta21$ between the fifth receiving moment $Ta2$ and the fourth sending moment $Ta1$, the fourth receiving moment $Tb1$, the fifth sending moment $Tb2$, the sixth receiving moment $Tb3$, and the difference $Ta32$ between the sixth sending moment and the fifth receiving moment, a distance between the positioning apparatus and the lock end to implement positioning of the lock end or the key end.

Optionally, after receiving sixth information $Pa3$, the lock end calculates the distance S between the lock end and the key end by substituting the difference $Ta21$ between the fifth receiving moment $Ta2$ and the fourth sending moment $Ta1$ and the difference $Ta32$ between the sixth sending moment and the fifth receiving moment that are obtained from the sixth information $Pa3$, as well as the fourth receiving moment $Tb1$, the fifth sending moment $Tb2$, and the sixth receiving moment $Tb3$ into the formula: $S=[Ta21-(Tb2-Tb1)+(Tb3-Tb2)-Ta32] \times C \div 4$. In the above, C is a propagation speed of a signal in air.

In the above algorithm, timing, recording, and calculation of $Ta1$, $Ta2$, and $Tb21$ all take place in the same system, thereby avoiding a time-calculation error caused by time asynchronization between the lock end and the key end, and improving the positioning precision of a UWB key.

In a possible embodiment, in the positioning apparatus described in the embodiment of the seventh aspect of the disclosure, the third sending module is configured to repeatedly send the fourth information, the third receiving module is configured to repeatedly receive the fifth information in a synchronous manner, and the third sending module is further configured to repeatedly send the sixth information. A number of repetitions is $m$, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, and the sixth receiving moment is $Tb(2m+1)$. The third calculating module is configured to calculate the difference $Ta(2m)(2m-1)$ between the fifth receiving moment $Ta2m$ and the fourth sending moment $Ta(2m-1)$ and the difference $Ta(2m+1)2m$ between the sixth sending moment and the fifth receiving moment. In terms of calculating, according to the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the lock end to implement positioning of the lock end or the key end, the lock end is configured to calculate the distance S between the lock end and the key end according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C\div(4m)$, where $C$ is a propagation speed of a signal in air.

Specifically, each repetition involves a time when the fourth information is sent from the positioning apparatus to the lock end, a time when the fourth information runs inside the lock end, a time when the fifth information is sent from the lock end to the positioning apparatus, a time when the fifth information runs inside the positioning apparatus, and a time when the sixth information is sent from the positioning apparatus to the lock end.

In the first one of repetitions, $(Tb2-Tb1)$ is the time when the fourth information runs inside the lock end, and $Ta21-(Tb2-Tb1)$ is the sum of the time when the fourth information is sent from the sending module to the lock end and the time when the fifth information is sent from the lock end to the receiving module. $Ta32$ is the time when the fifth information runs inside the key end, and $(Tb3-Tb2)-Ta32$ is the sum of the time when the fifth information is sent from the lock end to the positioning apparatus and the time when the sixth information is sent from the positioning apparatus to the lock end. $Ta21-(Tb2-Tb1)+(Tb3-Tb2)-Ta32$ is the time for one repetition, and then is divided by 4 to obtain a time when the information runs once between the lock end and the key end. In the $m$-th repetition, $[Tb(2m)-Tb(2m-1)]$ is the time when the fourth information runs inside the lock end, and $Ta(2m)(2m-1)-[Tb(2m)-Tb(2m-1)]$ is the sum of the time when the fourth information is sent from the key end to the lock end and the time when the fifth information is sent from the lock end to the key end. $Ta(2m+1)(2m)$ is the time when the fifth information runs inside the key end, and $[Tb(2m+1)-Tb(2m)]-Ta(2m+1)(2m)$ is the sum of the time when the fifth information is sent from the lock end to the key end and the time when the sixth information is sent from the key end to the lock end. $Ta(2m)(2m-1)-[Tb(2m)-Tb(2m-1)]+[Tb(2m+1)-Tb(2m)]-Ta(2m+1)(2m)$ is the time for one repetition, and then is divided by $4m$ to obtain a time when the information runs once between the lock end and the key end.

In the above algorithm, recording and calculation of $Ta1$, $Ta2$ ... $Ta(2m+1)$, and $Tb1$, $Tb2$ ... $Tb(2m+1)$, and $Tb21$ ...$Tb(2m+1)(2m)$ all take place in the same timing system, thereby avoiding a time-calculation error caused by time asynchronization between the lock end and the key end. In addition, a multi-pass averaging method is used, and the greater the value of $m$ is, the higher the precision is, so that the positioning precision of the positioning technology described in the disclosure can be significantly improved. Optionally, when the number $m$ of repetitions is 2, the positioning precision of 10cm can be achieved.

In a possible embodiment, in the positioning apparatus described in the embodiment of the seventh aspect of the disclosure, the third receiving module is further configured to receive seventh information from the lock end and record a seventh receiving moment $Ta0$ of the seventh information before the third sending module sends the fourth information. The fifth information further includes a seventh sending moment $Tb0$ and the seventh receiving moment $Ta0$ of the seventh information. In terms of calculating, according to the seventh sending moment $Tb0$, the seventh receiving moment $Ta0$, the fourth sending moment, the difference between the fifth sending moment and the fourth receiving moment, the difference between the sixth sending moment and the fifth receiving moment, and the sixth receiving moment, the distance between the lock end and the positioning apparatus to implement positioning of the key end or the lock end, the lock end is configured to calculate the distance S between the lock end and the key end according to a formula $S=\{(Tb1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C\div(4m+4)$, where $C$ is a propagation speed of a signal in air.

Optionally, before the sending module sends the fourth information, the lock end packs request information for positioning, records as the seventh sending moment $Tb0$ a time when the packing is completed, obtains the fourth information $Pb0$ by packing the seventh sending moment $Tb0$ into the request information for positioning, and then sends the fourth information $Pb0$ to the key end. Specifically, $(Ta1-Ta0)$ is a time when the seventh information $Pb0$ runs inside the lock end, and $(Tb1-Tb0)-(Ta1-Ta0)$ is the sum of a time when the seventh information $Pb0$ is sent from the key end to the lock end and a time when the seventh information $Pb0$ is sent from the lock end to the key end. $(Tb2-Tb1)$ is the time when the information runs inside the lock end, and $(Ta2-Ta1)-(Tb2-Tb1)$ is the sum of the time when the information is sent from the key end to the lock end and the time when the information is sent from the lock end to the key end. As such, a time when the information runs once between the lock end and the key end can be obtained by dividing $(Tb1-Tb0)-(Ta1-Ta0)+(Ta2-Ta1)-(Tb2-Tb1)$ by 4. In this embodiment, for the positioning method, operations initiated by the lock end are added, and another repetition path $(Tb1-Tb0)-(Ta1-Ta0)+(Ta2-Ta1)-(Tb2-Tb1)$ is added based on the formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C\div(4m)$. Finally, the number of repetitions becomes $(m+1)$, and the dividing number of signal round-trips is also changed from $4m$ to $4(m+1)$, i.e., $(4m+4)$.

In this embodiment, for the positioning apparatus applied to the key end, operations are initiated by the lock end, and the distance between the lock end and the key end can be calculated according to the formula.

In a possible embodiment, according to the embodiment of the seventh aspect of the disclosure, the lock end includes *P* positioning modules, and *P*≥3. The lock end is further configured to calculate a distance between the positioning apparatus and each of the *P* positioning modules in the lock end, and position the key end according to the distance between the positioning apparatus and each of the *P* positioning modules in the lock end.

Optionally, for the *P* positioning modules, 3≤*P*≤8. Optionally, the positioning modules are electrically connected via an LIN.

Specifically, according to the algorithm described in the embodiment of the seventh aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

Optionally, a power-consumption current of the lock end is less than 0.1mA, and a power-consumption current of the positioning module is less than 0.05mA.

A positioning apparatus is further provided in an embodiment of an eighth aspect of the disclosure. The positioning apparatus is applied to a lock end, and includes a fourth sending module, a fourth receiving module, and a fourth calculating module. The fourth receiving module is configured to receive fourth information from a key end and record a fourth receiving moment of the fourth information. The fourth sending module is configured to send fifth information to the key end and record a fifth sending moment of the fifth information. The fifth information includes request information, and the fifth information indicates the key end to execute the following operations: receiving the fifth information and recording a fifth receiving moment of the fifth information, packing the fifth information, and recording a current time as a sixth sending moment after completion of packing; calculating a difference between the fifth receiving moment of the fifth information and a fourth sending moment of the fourth information and the difference between the fifth receiving moment of the fifth information and the fourth sending moment of the fourth information; and sending sixth information to the positioning apparatus. The fourth receiving module is further configured to receive the sixth information from the key end and record a sixth receiving moment of the sixth information. The sixth information includes request information, the difference between the fifth receiving moment and the fourth sending moment, and a difference between the sixth sending moment and the fifth receiving moment. The fourth calculating module is configured to calculate, according to the difference between the fifth receiving moment and the fourth sending moment, the fourth receiving moment, the fifth sending moment, the sixth receiving moment, and the difference between the sixth sending moment and the fifth receiving moment, a distance between the positioning apparatus and the key end to implement positioning of the lock end or the key end.

In a possible embodiment, in the positioning apparatus described in the embodiment of the eighth aspect of the disclosure, the fourth receiving module is configured to repeatedly receive the fourth information from the key end, the fourth sending module is configured to repeatedly send the fifth information to the key end in a synchronous manner, and the fourth receiving module is further configured to repeatedly receive the sixth information from the key end. A number of repetitions is *m*, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, and the sixth receiving moment is $Tb(2m+1)$. The fourth calculating module is configured to calculate the difference $Ta2m(2m-1)$ between the fifth receiving moment $Ta2m$ and the fourth sending moment $Ta(2m-1)$ and the difference $Ta(2m+1)2m$ between the sixth sending moment and the fifth receiving moment. In terms of calculating, according to the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the key end to implement positioning of the lock end or the key end, the fourth calculating module is configured to calculate the distance S between the lock end and the key end according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C\div(4m)$, where C is a propagation speed of a signal in air.

In a possible embodiment, in the positioning apparatus described in the embodiment of the eighth aspect of the disclosure, the fourth sending module is configured to send seventh information to the key end and record a seventh sending moment $Tb0$ of the seventh information before the fourth receiving module receives the fourth information from the key end. The fifth information further includes the seventh sending moment $Tb0$ and a seventh receiving moment $Ta0$ of the seventh information. In terms of calculating, according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the key end to implement positioning of the key end or the lock end, the fourth calculating module is configured to: according to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C\div(4m+4)$.

In a possible embodiment, the positioning apparatus described in the embodiment of the eighth aspect of the disclosure includes *P* positioning modules, and *P*≥3. The fourth calculating module is further configured to calculate a distance between the key end and each of the $P$ positioning modules in the positioning apparatus, and position the key end according to the distance between the key end and each of the $P$ positioning modules in the positioning apparatus.

Optionally, for the $P$ positioning modules, $3 \leq P \leq 8$. Optionally, the positioning modules are electrically connected via an LIN.

Optionally, the positioning modules are electrically connected via the LIN.

Specifically, according to the algorithm described in the embodiment of the eighth aspect of the disclosure, for calculating the distance between the key end and each of the positioning modules in the lock end, the positioning modules have their respective fixed position, and obtained distances between the positioning modules and the key end are different from each other. The key end is positioned according to distance differences between the positioning modules and the key end.

Optionally, a power-consumption current of the lock end is less than 0.1mA, and a power-consumption current of the positioning module is less than 0.05mA.

For detailed descriptions, reference can be made to the above embodiments of the disclosure, which will not be repeated herein.

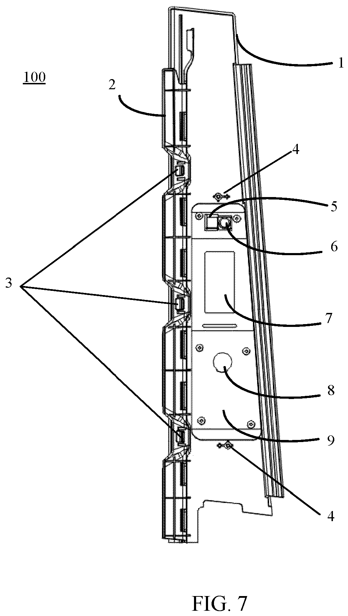

Specifically, as illustrated in FIG. 7, an electronic device 100 is further provided in embodiment of the disclosure. The electronic device 100 is applied to a lock end. The electronic device 100 includes a communication assembly 9, and the communication assembly 9 includes a Bluetooth component and a wideband component electrically connected with the Bluetooth component. The Bluetooth component is configured to periodically detect a Bluetooth connection request, and the wideband component is configured for wireless communication with a key end. Upon detection and identification of the key end by the Bluetooth component, the Bluetooth component stops detecting and sends a signal to power up the wideband component. The wideband component is connected with the key end for wireless communication, and obtains a relative position of the key end relative to the electronic device 100 through calculation.

Optionally, the wideband component is a UWB device, and the Bluetooth component is a Bluetooth low-energy (BLE) device. Prior to detection and identification of the key end by the BLE device, the BLE device is in a low-energy sleep mode, and the UWB device is in a power-off mode. Therefore, the electronic device 100 is in a low-energy mode when the electronic device 100 is not enabled.

Optionally, the electronic device 100 further includes a near-field communication (NFC) device, and the NFC device is configured to control the electronic device 100 when the key end is out of power.

Optionally, the electronic device 100 further includes an image pick-up apparatus 6, an infrared emitter 5, and a proximity sensor 8. The image pick-up apparatus 6 and the infrared emitter 5 are each electrically connected with the proximity sensor 8, and the image pick-up apparatus 6 is electrically connected with the infrared emitter 5. The proximity sensor 8 is configured to sense a living being and send a signal to enable the infrared emitter 5 and the image pick-up apparatus 6, when the living being approaches the electronic device 100. The infrared emitter 5 is configured to emit an infrared ray to the living being, and the image pick-up apparatus 6 is configured to receive the infrared ray emitted from the living being and perform modeling.

Optionally, the infrared emitter 5 is configured to emit an infrared ray in a wavelength band from 780nm to 2500nm.

Optionally, the image pick-up apparatus 6 includes a pick-up lens. The pick-up lens is a prime lens or a zoom lens, and the number of the pick-up lenses may be monocular, binocular, or multiocular.

Optionally, the pick-up lens is a time-of-flight (TOF) 3D imaging camera (a TOF camera), which can achieve face or human-eye identity identification within a distance range of 20cm to 2500cm.

Optionally, when the proximity sensor 8 identifies no living being approaching the electronic device 100, the image pick-up apparatus 6 is in a low-power mode. Optionally, the proximity sensor 8 may be, but is not limited to, a fingerprint module, a button, a capacitive human-body sensor, or an infrared sensor.

Optionally, a display apparatus 7 is electrically connected with the image pick-up apparatus 6 and is configured to display prompt information, alarm information, and a modeling image from the image pick-up apparatus 6. Optionally, the display apparatus 7 has an ultraviolet-resistant coating.

Optionally, the positioning apparatus further includes a bracket 2, a trim glass 1, and a pin 4. The bracket 2 is arranged around least one side of the trim glass 1. The pin 4 is configured to fix a circuit-board assembly onto the bracket 2. Mounting points 3 are defined on the bracket 2 and are configured to communicate the bracket 2 with the outside. The transmittance of the trim glass 1 in a near-infrared wavelength band from 780nm to 2500nm is greater than 90%, and the trim glass 1 has a good curved-surface molding property and can be thermally bending.

The electronic device 100 further includes $P$ positioning modules, and $P \geq 3$. The electronic device 100 is further configured to calculate a distance between the key end and each of the $P$ positioning modules in the electronic device 100, and position the key end according to the distance between the key end and each of the $P$ positioning modules in the electronic device 100.

Optionally, for the $P$ positioning modules, $3 \leq P \leq 8$. Optionally, the positioning modules are electrically connected via an LIN.

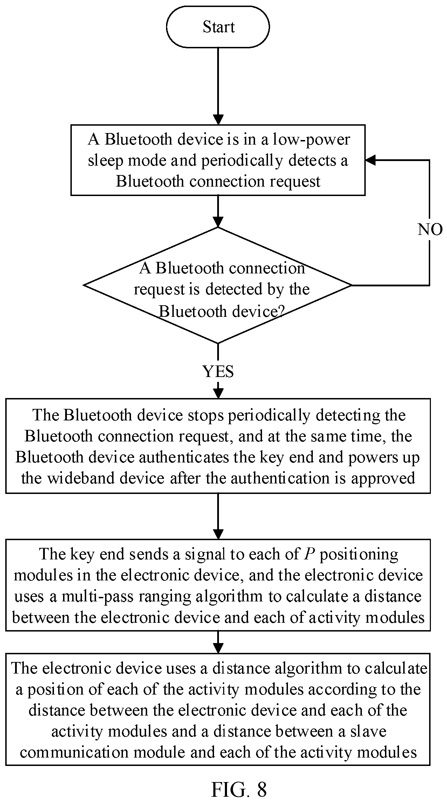

Optionally, as illustrated in FIG. 8, a process of calculating a relative position of a key end relative to a lock end by the electronic device 100 includes the following.

At S801, a Bluetooth device is in a low-power sleep mode and periodically detects a Bluetooth connection request, and a wideband device is in a power-off state.

At S802, when the Bluetooth device detects no Bluetooth connection request, the Bluetooth device is kept in the low-power sleep mode and continues to periodically detect a Bluetooth connection request.

At S803, upon detection of the Bluetooth connection request from the key end by the Bluetooth device, the Bluetooth device stops periodically detecting the Bluetooth connection request, and at the same time, the Bluetooth device authenticates the key end and powers up the wideband device after the authentication is approved.

At S804, the key end sends a signal to each of $P$ positioning modules in the electronic device 100, and the electronic device 100 uses a multi-pass ranging algorithm to calculate a distance between the electronic device 100 and each of activity modules. The electronic device 100 uses a distance algorithm to calculate a position of each of the activity modules according to the distance between the electronic device 100 and each of the activity modules and a distance between a slave communication module and each of the activity modules.

In a possible embodiment, a computer-readable storage medium is provided in an embodiment of a ninth aspect of the disclosure. The computer-readable storage medium is configured to store computer-executable program codes. The computer-executable program codes are configured to cause a computer to perform the positioning method described in the disclosure.

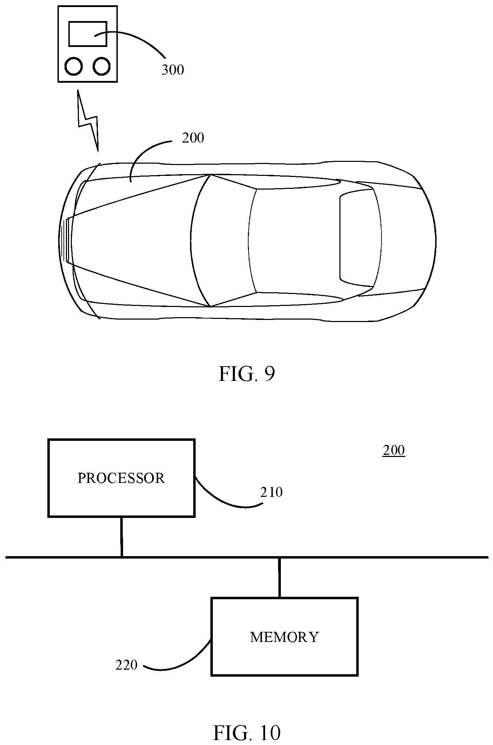

As illustrated in FIG. 9 and FIG. 10, in a possible embodiment, a vehicle 200 is provided in an embodiment of a tenth aspect of the disclosure. The vehicle includes a memory 220 and a processor 210 electrically connected with the memory 220. The memory 220 is configured to store program codes executable by the processor 210, and the program codes which, when invoked and executed by the processor 210, are operable to perform the positioning method described in the disclosure.

Optionally, as illustrated in FIG. 9, the vehicle 200 receives a signal from an electronic key 300 and positions the electronic key 300 by performing the positioning method described in the disclosure.

Specifically, as illustrated in FIG. 10, the memory 220, as a non-volatile computer-readable storage medium, can be configured to store a non-volatile software program, a non-volatile computer-executable program, and a module, such as a program instruction/module corresponding to the positioning method in embodiments of the disclosure. The processor 210 implements data processing and various function applications of a server by running the non-volatile software program, instruction, and module stored in the memory 220.

The memory 220 may include a random access memory (RAM) 220, a read-only memory (ROM) 220, an electrically erasable programmable read-only memory (EEPROM), a compact disc read-only memory (CD-ROM) or other compact disc storage, a magnetic disk storage medium or another magnetic storage device, or any other medium that can be configured to carry or store expected program codes in a form of an instruction or a data structure and that can be accessed by a computer. In addition, any connection may be appropriately referred to as a computer-readable medium.

Specifically, with the positioning apparatus described in the disclosure, the interaction precision can be improved in algorithm. In the process of sending and receiving information, recording and calculation of time take place in the same timing system during positioning, and thus the transmission time of the information in the same device can be eliminated, so that a precise time for propagation of the information between the lock end and the key end can be obtained. Then, an average time is obtained through repeated measurements, and thus the time error is further reduced. In addition, a multi-pass average ranging algorithm is used for calculation, thereby improving the positioning precision. By mounting the positioning apparatus described in the disclosure in the vehicle 200, more precise positioning information can be obtained, and 10cm-level precise positioning of the key end can be achieved. The vehicle 200 in the disclosure may be, but is not limited to, a sedan, a multi-purpose vehicle (MPV), a sport/suburban utility vehicle (SUV), an off-road vehicle (ORV), a pick-up truck, a van, a bus, a goods vehicle, etc.

A positioning method, a positioning apparatus, a computer-readable storage medium, and a vehicle according to an embodiment of a second concept of the disclosure will be introduced in the following embodiments. The positioning method according to the second concept of the disclosure can be used for positioning for environments such as vehicles, buildings, and access control.

As illustrated in FIG. 11, a positioning method is provided in the disclosure. The positioning method is applied to a lock end, and the lock end includes multiple antenna modules. The method includes the following.

At S101, request information is received from a key end, and a receiving moment for reception of the request information by each of the multiple antenna modules is calculated, where the request information includes positioning information.

Specifically, the key end sends request information to the lock end, and the lock end receives the request information from the key end and calculates a receiving moment for reception of the request information by each of the multiple antenna modules. In other words, the lock end calculates a moment when the request information arrives at each of the antenna modules. Since the respective antenna modules have different positions and have different distances from the key end, the moments when the request information arrives at the respective antenna modules will be different.

Optionally, the lock end may be, but is not limited to, a lock such as a car door lock, a smart door lock, or a lock of another vehicle.

Optionally, the key end may be, but is not limited to, an electronic device with communication functions, such as a mobile phone, a tablet, a band, a smart watch, smart glasses, or a vehicle key.

Optionally, the number of the antenna modules is between 3 and 7. Specifically, the number of the antenna modules may be, but is not limited to, 3, 4, 5, 6, or 7. The larger the number of the antenna modules, the higher the positioning precision of the key end can be, and the more likely the precise positioning and unlocking can be achieved.

Optionally, when the number of the multiple antenna modules is 4, the positioning precision of 10cm can be achieved.

At S102, coordinates of the key end are calculated according to coordinates of each of the multiple antenna modules in a preset coordinate system and the receiving moment for each of the multiple antenna modules, to implement positioning of the key end.

Optionally, upon reception of positioning-request information from the key end, the lock end responds to the request information and determines the origin O in the lock end according to the preset coordinate system. In this case, for each antenna module, a coordinate position of the antenna module is determined, a distance between the antenna module and the key end can be determined according to a receiving moment for the antenna module, and the coordinates of the key end can be calculated according to the distance, so as to implement positioning of the key end.

Specifically, the coordinate system has been calibrated and recorded before being used for the lock end. Optionally, the coordinate system may be established after determination of an application scenario.

In some embodiments, the lock end is a vehicle, and the vehicle has four doors. The number of antenna modules is 4, each antenna module corresponds to one door, and the four antenna modules are arranged in a square and are each positioned at one of four corners of the square. The side length of the square is 2m. Taking a position of one of the four antenna modules as the origin, coordinates of the one of the four antenna modules are (0, 0, 0), and coordinates of the other three antenna modules are (2, 0, 0), (0, 2, 0), and (2, 2, 0), respectively.

As illustrated in FIG. 12, in a possible embodiment, the lock end includes a first antenna module, a second antenna module, and a third antenna module. The method includes the following.

At S201, request information is received from the key end, and a first receiving moment *Ta* for the first antenna module, a second receiving moment *Tb* for the second antenna module, and a third receiving moment *Tc* for the third antenna module are calculated respectively.

In other words, the receiving moment for reception of the request information by each of the multiple antenna modules is calculated as follows. The first receiving moment *Ta* for the first antenna module, the second receiving moment *Tb* for the second antenna module, and the third receiving moment *Tc* for the third antenna module are calculated respectively.

At S202, a point in the lock end is taken as an origin, coordinates of the first antenna module are taken as (*Xa, Ya, Za*), coordinates of the second antenna module are taken as (*Xb, Yb, Zb*), and coordinates of the third antenna module are taken as *(Xc, Yc, Zc)*.

In other words, a point in the lock end is taken as the origin (0, 0, 0). Based on the origin and the preset coordinate system, the coordinates of the first antenna module are denoted as (*Xa, Ya, Za*), the coordinates of the second antenna module are denoted as *(Xb, Yb, Zb)*, and the coordinates of the third antenna module are denoted as *(Xc, Yc, Zc)* in the coordinate system. Optionally, coordinates of any component in the lock end can be denoted in the coordinate system, so as to reflect a spatial position of a corresponding component in the lock end.

At S203, coordinates *(Xk, Yk, Zk)* of the key end in the preset coordinate system are calculated according to the following formula:

$$|Ta\text{-}Tb|\times C=|\sqrt{(Xk-Xa)^2+(Yk-Ya)^2+(Zk-Za)^2}-\sqrt{(Xk-Xb)^2+(Yk-Yb)^2+(Zk-Zb)^2}|;$$

$$|Tb\text{-}Tc|\times C=|\sqrt{(Xk-Xb)^2+(Yk-Yb)^2+(Zk-Zb)^2}-\sqrt{(Xk-Xc)^2+(Yk-Yc)^2+(Zk-Zc)^2}|;$$

$$|Tc\text{-}Ta|\times C=|\sqrt{(Xk-Xc)^2+(Yk-Yc)^2+(Zk-Zc)^2}-\sqrt{(Xk-Xa)^2+(Yk-Ya)^2+(Zk-Za)^2}|;$$

where C is a propagation speed of a signal in air.

Optionally, the key end sends request information. A receiving moment for the first one of the multiple antenna modules that receives the request information is denoted as *Ta, a* receiving moment for the second one of the multiple antenna modules that receives the request information is denoted as *Tb,* a receiving moment for the third one of the multiple antenna modules that receives the request information is denoted as *Tc,* and similarly, a receiving moment for the n-th one of the multiple antenna modules that receives the request information is denoted as *Tn.* The lock end receives the request information from respective antenna modules, and obtains different receiving moments for the respective antenna modules through calculation, that is, *Ta, Tb, Tc, ... Tn.* The lock end calculates, according to the receiving moment for each antenna module, the coordinates of the key end to implement positioning of the key end.

Specifically, a coordinate position of the key end is *(Xk, Yk, Zk),* and distances between point *K* and point *A,* between point *K* and point *B,* and between point *K* and point *C* are *KA, KB,* and *KC* respectively. It can be obtained that $|KA\text{-}KB|=|Ta\text{-}Tb|\times C$, $|KB\text{-}KC|=|Tb\text{-}Tc|\times C$, and $|KC\text{-}KA|=|Tc\text{-}Ta|\times C$. Based on this, the precise coordinate position *(Xk, Yk, Zk)* of the key end can be calculated.

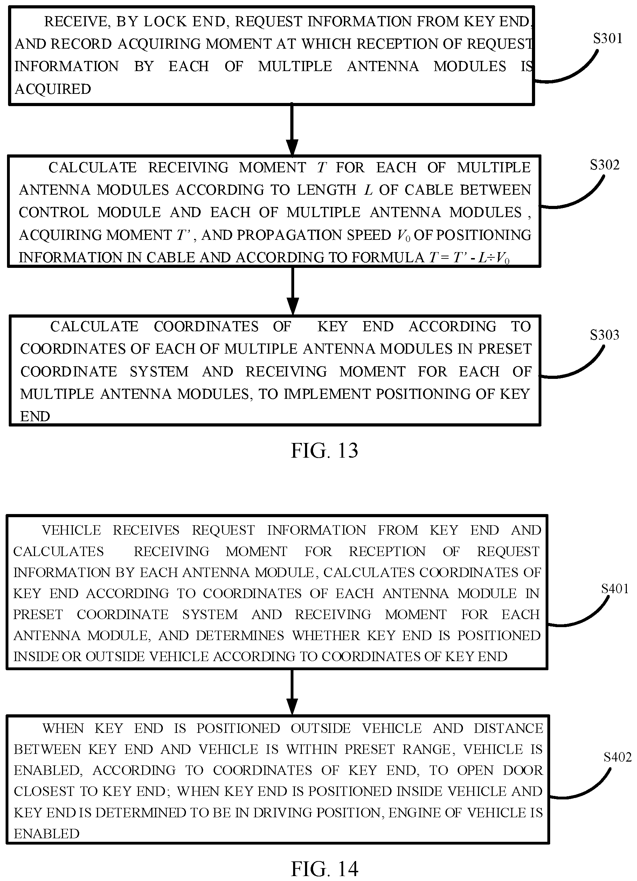

As illustrated in FIG. 13, in a possible embodiment, the lock end includes a control module and multiple antenna modules. The control module is in communication connection with each of the multiple antenna modules via a cable.

At S301, request information is received from the key end, and an acquiring moment at which reception of the request information by each of the multiple antenna modules is acquired is recorded.

Specifically, the multiple antenna modules in the lock end receive the request information from the key end, and the control module records the acquiring moment at which reception of the request information by each of the multiple antenna modules is acquired. The acquiring moment includes a request moment when the request information from the key end is received by the multiple antenna modules, and a time that is lost at the lock end during running of the request information from the antenna modules to the control module.

At S302, the receiving moment *T* for each of the multiple antenna modules is calculated according to a length *L* of the cable between the control module and each of the multiple antenna modules and the acquiring moment *T'* as follows. According to a formula $T = T' - L \div V_0$, where $V_0$ is a propagation speed of positioning information in the cable.

Specifically, according to the length *L* of the cable between the control module and each of the antenna modules and the propagation speed $V_0$ of the positioning information in the cable, the time that is lost at the lock end during running of the request information from the control module to the antenna modules can be obtained based on $L \div V_0$. Then, the receiving moment *T* for each of the antenna modules can be obtained by subtracting from the acquiring moment *T'* the lost time of the request information in the cable.

Optionally, a first acquiring moment for the first antenna module is *Ta',* a second acquiring moment for the second antenna module is *Tb',* and a third acquiring moment for the second antenna module is *Tc'.* The length of a cable between the first antenna module and the control module is *La,* the length of a cable between the second antenna module and the control module is *Lb,* and the length of a cable between the third antenna module and the control module is *Lc.* According to the formula, a first receiving moment for the first antenna module is denoted as *Ta,* and $Ta = Ta' - La \div V_0$; a second receiving moment for the second antenna module is denoted as *Tb,* and $Tb = Tb' - Lb \div V_0$; and a third receiving moment for the third antenna module is denoted as *Tc,* and $Tc = Tc' - Lc \div V_0$.

In the positioning method described in the disclosure, recording and calculation of *Ta, Tb, Tc ... Tn* and *Ta', Tb', Tc' ...* all take place in the same timing system, thereby avoiding a time-calculation error caused by time asynchronization between the lock end and the key end. In addition, the cable length between the control module and each of the antenna modules is calibrated, further improving the positioning precision. When 4 antenna modules are provided, 10cm-level positioning can be achieved, which is enough to satisfy the current precision requirements. Furthermore, higher precision can be obtained by increasing the number of antenna modules. Optionally, when the cable lengths *La, Lb,* and *Lc* are equal, the software algorithm can be simplified.

At S303, coordinates of the key end are calculated according to coordinates of each of the multiple antenna modules in a preset coordinate system and the receiving moment for each of the multiple antenna modules, to implement positioning of the key end.

As illustrated in FIG. 14, in a possible embodiment, the lock end is a vehicle. Each of the multiple antenna modules includes an interior antenna module and an exterior antenna module, the interior antenna module is positioned inside the vehicle, and the exterior antenna module is positioned outside the vehicle. The positioning method further includes the following.

At S401, the vehicle receives request information from the key end and calculates a receiving moment for reception of the request information by each antenna module, calculates coordinates of the key end according to coordinates of each antenna module in a preset coordinate system and a receiving moment for each antenna module, and determines whether the key end is positioned inside or outside the vehicle according to the coordinates of the key end. The exterior antenna module is configured for communication connection with the key end when the key end is positioned outside the vehicle, and the interior antenna module is configured for communication connection with the key end when the key end is positioned inside the vehicle.

At S402, When the key end is positioned outside the vehicle and a distance between the key end and the vehicle is within a preset range, the vehicle is enabled, according to the coordinates of the key end, to open a door closest to the key end. When the key end is positioned inside the vehicle and the key end is determined to be in a driving position, an engine of the vehicle is enabled.

Specifically, when the lock end is made of metal or other materials that inhibit information transmission, each antenna module includes an interior antenna module and an exterior antenna module to ensure smooth information transmission. The interior antenna module is positioned inside the lock end, and the exterior antenna module is positioned outside the lock end. The exterior antenna module in each antenna module is configured for wireless communication connection with the key end to receive a signal from the key end, when the key end is positioned outside the lock end. When the key end enters the lock end from the outside of the lock end, a signal-transmission line between the key end and the exterior antenna module is occluded and blocked by the lock end. In this case, the interior antenna module takes the place of the exterior antenna module and is configured for wireless communication connection with the key end, so as to keep a smooth signal-transmission line between the key end and the antenna module, thereby implementing the continuous positioning of the key end inside and outside the lock end.

Specifically, when the lock end is a vehicle, a vehicle shell is generally made of sheet metal or other materials that may inhibit information transmission. In order to maintain smooth wireless information transmission between the key end and the vehicle, the exterior antenna module in each antenna module of the vehicle is configured for wireless communication connection with the key end to receive a signal from the key end, when the key end is positioned outside the vehicle. When the key end enters the vehicle from the outside of vehicle, a signal-transmission line between the key end and the exterior antenna module is occluded and blocked by the vehicle shell. In this case, the interior antenna module takes the place of the exterior antenna module and is configured for wireless communication connection with the key end, so as to keep a smooth signal-transmission line between the key end and the antenna module, thereby implementing the continuous positioning of the key end inside and outside the vehicle. In addition, the vehicle itself can position the key end by constructing a coordinate system, and can further determine a position relationship between the key end and each of components in the vehicle more precisely according to a position of each of the components in the vehicle in the coordinate system, thereby facilitating realization of other functions. Optionally, when the key end is positioned outside the vehicle and close to the vehicle, the vehicle is enabled, according to the coordinates of the key end, to open a door closest to the key end. When the key end is positioned inside the vehicle, the vehicle determines whether the coordinates of the key end are in a driving position, and if yes, an engine of the vehicle can be automatically enabled.

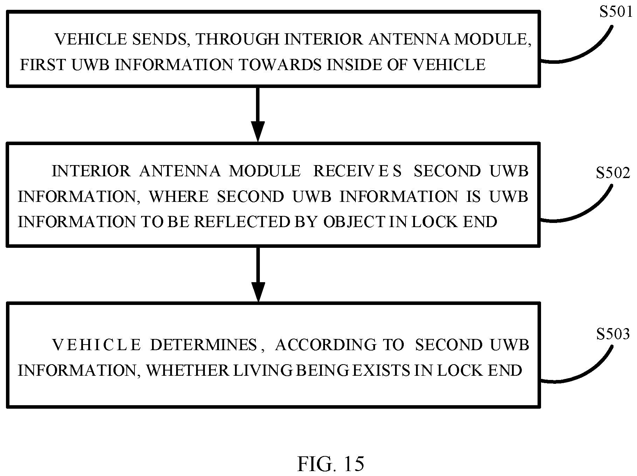

As illustrated in FIG. 15, in a possible embodiment, when the key end is positioned outside the vehicle and the distance between the key end and the vehicle is outside the preset range, the positioning method further includes the following. A living being is detected inside the vehicle. The living being is detected inside the vehicle as follows.

At S501, first UWB information is sent by the interior antenna module.

At S502, second UWB information is received, where the second UWB information is UWB information to be reflected by an object in the lock end.

At S503, whether the living being exists in the lock end is determined according to the second UWB information.

Specifically, the interior antenna module sends the first UWB information. After the first UWB information reaches a surface of the living being, a part of the first UWB information may be reflected by the living being, and the first UWB information to be reflected by the living being carries vital sign information of the living being, i.e., the second UWB information. After the second UWB information is received by the interior antenna module, the interior antenna module can obtain vital sign information such as heartbeat and respiration in an appropriate signal-processing method, thereby completing the detection of the living being in the lock end. Such a detection method requires a simple device and low cost. When the lock end is a vehicle, vital information of the living being such as a child or a pet inside the vehicle can be monitored in real time, which can improve the use safety of the vehicle.

In a possible embodiment, a positioning apparatus is further provided in the disclosure. The positioning apparatus is applied to a lock end, and includes a receiving module and an analyzing and calculating module. The receiving module includes multiple antenna modules and is configured to receive request information from a key end, where the request information includes positioning information. The analyzing and calculating module is configured to calculate a receiving moment for reception of the request information by each of the multiple antenna modules. The analyzing and calculating module is further configured to calculate, according to coordinates of each of the multiple antenna modules in a preset coordinate system and the receiving moment for each of the multiple antenna modules, coordinates of the key end to implement positioning of the key end.

Optionally, the lock end may be, but is not limited to, a lock such as a car door lock, a smart door lock, or a lock of another vehicle.

Optionally, the key end may be, but is not limited to, an electronic device with communication functions, such as a mobile phone, a tablet, a band, a smart watch, smart glasses, or a vehicle key.

Optionally, the receiving module includes multiple antenna modules, and the number of the antenna modules is between 3 and 7.

Optionally, when the number of the antenna modules is 4, the positioning precision of 10cm can be achieved.

Optionally, the origin *O* at the lock end is first determined according to the preset coordinate system. Then, for each antenna module, a coordinate position of the antenna module is determined, a distance between the antenna module and the key end can be determined according to a receiving moment for the antenna module, and the coordinates of the key end can be calculated according to the distance, so as to implement positioning of the key end.

In a possible embodiment, the receiving module includes a first antenna module, a second antenna module, and a third antenna module. The analyzing and calculating module is configured to calculate a first receiving moment *Ta* for the first antenna module, a second receiving moment *Tb* for the second antenna module, and a third receiving moment *Tc* for the third antenna module respectively. The analyzing and calculating module is further configured to take a point in the lock end as an origin, coordinates of the first antenna module as (*Xa, Ya, Za*), coordinates of the second antenna module as (*Xb, Yb, Zb*), coordinates of the third antenna module as (*Xc, Yc, Zc*), and the coordinates of the key end as (*Xk, Yk, Zk*). The analyzing and calculating module is further configured to calculate the coordinates of the key end according to the following formula:

$$|Ta\text{-}Tb|\times C = |\sqrt{(Xk-Xa)^2+(Yk-Ya)^2+(Zk-Za)^2} - \sqrt{(Xk-Xb)^2+(Yk-Yb)^2+(Zk-Zb)^2}|;$$

$$|Tb\text{-}Tc|\times C = |\sqrt{(Xk-Xb)^2+(Yk-Yb)^2+(Zk-Zb)^2} - \sqrt{(Xk-Xc)^2+(Yk-Yc)^2+(Zk-Zc)^2}|;$$

$$|Tc\text{-}Ta|\times C = |\sqrt{(Xk-Xc)^2+(Yk-Yc)^2+(Zk-Zc)^2} - \sqrt{(Xk-Xa)^2+(Yk-Ya)^2+(Zk-Za)^2}|;$$

where *C* is a propagation speed of a signal in air.

Optionally, the key end sends request information. A receiving moment for the first one of the multiple antenna modules that receives the request information is denoted as *Ta,* a receiving moment for the second one of the multiple antenna modules that receives the request information is denoted as *Tb,* a receiving moment for the third one of the multiple antenna modules that receives the request information is denoted as *Tc,* and similarly, a receiving moment for the *n*-th one of the multiple antenna modules that receives the request information is denoted as *Tn.* The analyzing and calculating module receives the request information from respective antenna modules, and obtains different receiving moments for the respective antenna modules through calculation, that is, *Ta, Tb, Tc, ... Tn.* The analyzing and calculating module calculates, according to the receiving moment for each antenna module, the coordinates of the key end to implement positioning of the key end.

Specifically, a coordinate position of the key end is *(Xk, Yk, Zk),* and distances between point *K* and point *A,* between point *K* and point *B,* and between point *K* and point *C* are *KA, KB,* and *KC* respectively. It can be obtained that |*KA-KB*|=|*Ta-Tb*|×*C,* |*KB-KC*|=|*Tb-Tc*|×*C,* and |*KC-KA*|=|*Tc-Ta*|×*C.* Based on this, the precise coordinate position (*Xk, Yk, Zk*) of the key end can be calculated.

In a possible embodiment, the analyzing and calculating module is further configured to record an acquiring moment at which reception of the request information by each of the multiple antenna modules is acquired. In terms of calculating, according to a distance *L* of a cable between the analyzing and calculating module and each of the multiple antenna modules and the acquiring moment *T',* the receiving moment *T* for each of the multiple antenna modules, the analyzing and calculating module is further configured to: according to a formula $T = T' - L \div V_0$, where $V_0$ is a propagation speed of positioning information at the lock end.

Optionally, a first acquiring moment for the first antenna module is *Ta',* a second acquiring moment for the second antenna module is *Tb',* and a third acquiring moment for the second antenna module is *Tc'.* The length of a cable between the first antenna module and the analyzing and calculating module is *La,* the length of a cable between the second antenna module and the analyzing and calculating module is *Lb,* and the length of a cable between the third antenna module and the analyzing and calculating module is *Lc.* According to the formula, a first receiving moment for the first antenna module is denoted as *Ta,* and $Ta = Ta' - La \div V_0$; a second receiving moment for the second antenna module is denoted as *Tb,* and $Tb = Tb' - Lb \div V_0$; and a third receiving moment for the third antenna module is denoted as *Tc,* and $Tc = Tc' - Lc \div V_0$.

In the positioning apparatus described in the disclosure, recording and calculation of *Ta, Tb, Tc ... Tn* and *Ta', Tb', Tc' ...* are all performed by the analyzing and calculating module in the positioning apparatus described in the disclosure, thereby avoiding a time-calculation error caused by time asynchronization between the lock end and the key end. In addition, the cable length between the analyzing and calculating module and each of the antenna modules is calibrated, further improving the positioning precision. When 4 antenna modules are provided, 10cm-level positioning can be achieved, which is enough to satisfy the current precision requirements. Furthermore, higher precision can be obtained by increasing the number of antenna modules. Optionally, when the cable lengths *La, Lb,* and *Lc* are equal, the software algorithm can be simplified.

In a possible embodiment, the positioning apparatus described in the disclosure further includes a Bluetooth module. The Bluetooth module is electrically connected with the receiving module and the analyzing and calculating module. Optionally, the Bluetooth module is a BLE device, the analyzing and calculating module is a UWB device, and the receiving module is a UWB device antenna (a UWB antenna). Prior to the detection and identification of the key end by the BLE device, the BLE device is in a low-energy sleep mode, the UWB device is in a power-off mode, and the UWB device antenna (the UWB antenna) does not receive external information. Therefore, the positioning apparatus is in a low-energy mode when the positioning apparatus is not enabled.

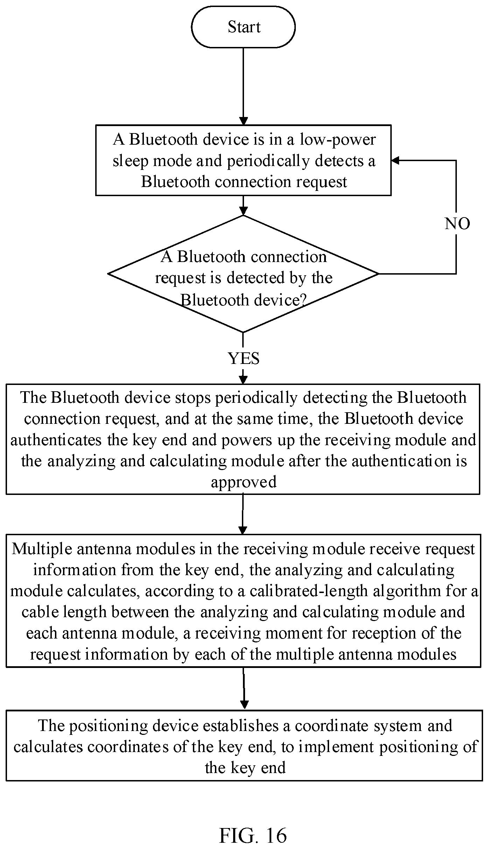

Specifically, as illustrated in FIG. 16, a process of calculating a relative position of a key end relative to a lock end by the positioning apparatus includes the following.

At S601, a Bluetooth device is in a low-power sleep mode and periodically detects a Bluetooth connection request. A receiving module and an analyzing and calculating module are both in a power-off state.

At S602, when the Bluetooth device detects no Bluetooth connection request, the Bluetooth device is kept in the low-power sleep mode and continues to periodically detect a Bluetooth connection request.

At S603, upon detection of the Bluetooth connection request from the key end by the Bluetooth device, the Bluetooth device stops periodically detecting the Bluetooth connection request, and at the same time, the Bluetooth device authenticates the key end and powers up the receiving module and the analyzing and calculating module after the authentication is approved.

At S604, multiple antenna modules in the receiving module receive request information from the key end. The analyzing and calculating module calculates, according to a calibrated-length algorithm for a cable length between the analyzing and calculating module and each antenna module, a receiving moment for reception of the request information by each of the multiple antenna modules; and calculates coordinates of the key end according to a preset coordinate system to implement positioning of the key end.

In a possible embodiment, the lock end is a vehicle. Each of the multiple antenna modules includes an interior antenna module and an exterior antenna module, the interior antenna module is positioned inside the vehicle, and the exterior antenna module is positioned outside the vehicle. The positioning apparatus is further configured to determine, according to the coordinates of the key end, whether the key end is positioned inside or outside the vehicle. The exterior antenna module is configured for communication connection with the key end when the key end is positioned outside the vehicle. The interior antenna module is configured for communication connection with the key end when the key end is positioned inside the vehicle. The positioning apparatus is configured to enable, according to the coordinates of the key end, the vehicle to open a door closest to the key end when the key end is positioned outside the vehicle and a distance between the key end and the vehicle is within a preset range; and enable an engine of the vehicle when the key end is positioned inside the vehicle and the key end is determined to be in a driving position. Specifically, when the lock end is made of metal or other materials that inhibit information transmission, each antenna module includes an interior antenna module and an exterior antenna module to ensure smooth information transmission. The interior antenna module is positioned inside the lock end, and the exterior antenna module is positioned outside the lock end. The exterior antenna module of each antenna module is configured for wireless communication connection with the key end to receive a signal from the key end, when the key end is outside the lock end. When the key end enters the lock end from the outside of the lock end, a signal-transmission line between the key end and the exterior antenna module is occluded and blocked by the lock end. In this case, the interior antenna module takes the place of the exterior antenna module and is configured for wireless communication connection with the key end, so as to keep a smooth signal-transmission line between the key end and the antenna module, thereby implementing the continuous positioning of the key end inside and outside the lock end.

Specifically, when the lock end is a vehicle, a vehicle shell is generally made of sheet metal or other materials that may inhibit information transmission. In order to maintain smooth wireless information transmission between the key end and the vehicle, that is, ensure stable wireless connection between the key end and the positioning apparatus, the exterior antenna module in each antenna module of the vehicle is configured for wireless communication connection with the key end to receive a signal from the key end, when the key end is outside the vehicle. When the key end enters the vehicle from the outside of vehicle, a signal-transmission line between the key end and the exterior antenna module is occluded and blocked by the vehicle shell. In this case, the interior antenna module takes the place of the exterior antenna module and is configured for wireless communication connection with the key end, so as to keep a smooth signal-transmission line between the key end and the antenna module, so that the positioning apparatus can continuously position the key end inside or outside the vehicle. In addition, the vehicle itself can position the key end by constructing a coordinate system, and can further determine a position relationship between the key end and each of components in the vehicle more precisely according to a position of each of the components in the vehicle in the coordinate system, thereby facilitating realization of other functions.

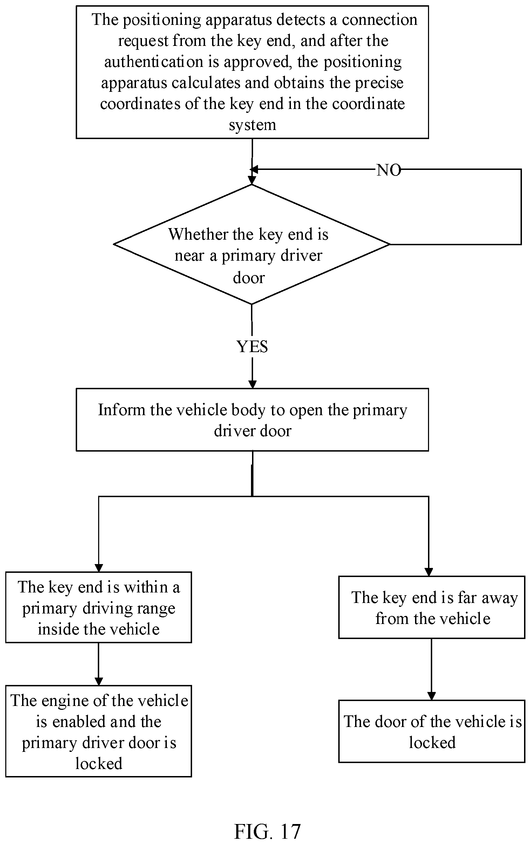

Optionally, when the key end is determined to be outside the vehicle, the vehicle determines the door closest to the key end according to the coordinate position of the key end. When the coordinates of the key end of the vehicle are within an unlocking coordinate-range of the vehicle, the vehicle is enabled to open the door closest to the key end, so as to facilitate a driver or a passenger to enter the vehicle. When the key end is inside the vehicle, the vehicle determines the position of the key end according to the coordinate position of the key end. When the key end is in a driving position of the vehicle, an engine of the vehicle is automatically enabled, so as to facilitate the driver to drive the vehicle. When the key end appears outside the vehicle, the vehicle determines, according to the coordinate position of the key end, that the coordinates of the key end of the vehicle are far away from the unlocking coordinate-range of the vehicle. In this case, the vehicle determines that the driver is away from the vehicle, and then automatically locks the door. Specifically, as illustrated in FIG. 17, the positioning apparatus detects a connection request from the key end, and after the authentication is approved, the positioning apparatus calculates and obtains the precise coordinates of the key end in the coordinate system. When the key end is not near a primary driver door of the vehicle, the primary driver door is not opened. When the key end is near the primary driver door of the vehicle, the primary driver door is opened, which is followed by detecting whether the key end is within a primary driving range inside the vehicle. If the key end is within the primary driving range inside the vehicle, the engine of the vehicle is enabled and the primary driver door is locked. When the key end is far away from the vehicle, the vehicle automatically locks the door.

In a possible embodiment, the positioning apparatus is further configured to detect a living being inside the vehicle when the key end is positioned outside the vehicle and the distance between the key end and the vehicle is outside the preset range. In terms of detecting the living being inside the vehicle, the interior antenna module is configured to send first UWB information. The interior antenna module is further configured to receive second UWB information, where the second UWB information is UWB information to be reflected by an object in the lock end. The analyzing and calculating module is further configured to determine, according to the second UWB information, whether the living being exists at the lock end.

Specifically, the interior antenna module sends the first UWB information. After the first UWB information reaches a surface of the living being, a part of the first UWB information may be reflected by the living being, and the first UWB information to be reflected by the living being carries vital sign information of the living being, i.e., the second UWB information. After the second UWB information is received by the interior antenna module, the interior antenna module can obtain vital sign information such as heartbeat and respiration in an appropriate signal-processing method, thereby completing the detection of the living being at the lock end. Such a detection method requires a simple device and low cost. When the lock end is a vehicle, vital information of the living being such as a child or a pet inside the vehicle can be monitored in real time, so that the child or pet will not be locked in the vehicle for a long time, thereby improving the use safety of the vehicle.

In a possible embodiment, a computer-readable storage medium is further provided in the disclosure. The computer-readable storage medium is configured to store computer-executable program codes. The computer-executable program codes are configured to cause a computer to perform the positioning method described in the disclosure.

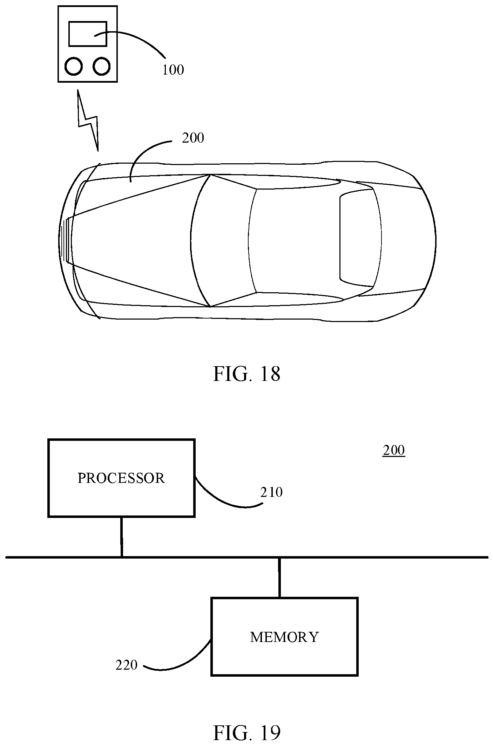

As illustrated in FIG. 18 and FIG. 19, in a possible embodiment, a vehicle 200 is further provided in the disclosure. The vehicle 200 includes a memory 220 and a processor 210 electrically connected with the memory 220. The memory 220 is configured to store program codes executable by the processor 210, and the program codes which, when invoked and executed by the processor 210, are operable to perform the positioning method described in the disclosure.

Optionally, as illustrated in FIG. 18, the vehicle 200 receives a signal from an electronic key 100 and positions the electronic key 100 by performing the positioning method described in the disclosure.

Specifically, as illustrated in FIG. 19, the memory 220, as a non-volatile computer-readable storage medium, can be configured to store a non-volatile software program, a non-volatile computer-executable program, and a module, such as a program instruction/module corresponding to the positioning method in embodiments of the disclosure. The processor 210 implements data processing and various function applications of a server, i.e., implement the positioning method in embodiments of the disclosure, by running the non-volatile software program, instruction, and module stored in the memory 220.

The memory 220 may include an RAM 220, an ROM 220, an EEPROM, a CD-ROM or other compact disc storage, a magnetic disk storage medium or another magnetic storage device, or any other medium that can be configured to carry or store expected program codes in a form of an instruction or a data structure and that can be accessed by a computer. In addition, any connection may be appropriately referred to as a computer-readable medium.

Specifically, for the positioning apparatus described in the disclosure, precision compensation for signal transmission inside the lock end is performed by calibrating signal-transmission time according to a cable length, and thus a moment at which the information is sent from the key end and a moment at which the information arrives at the lock end are obtained. In this way, a time-calculation error caused by time asynchronization between the control module and the antenna modules due to time loss during signal transmission via the cable will not occur, and thus a more precise time for propagation of the information between the lock end and the key end can be obtained, thereby improving the positioning precision. By mounting the positioning apparatus described in the disclosure in the vehicle 200, more precise positioning information can be obtained, and 10cm-level precise positioning of the key end can be achieved. The vehicle 200 in the disclosure may be, but is not limited to, a sedan, an MPV, an SUV, an ORV, a pick-up truck, a van, a bus, a goods vehicle, etc.

Although embodiments of the disclosure have been shown and described above, it may be understood that the above embodiments are exemplary and are not to be construed as a limitation of the disclosure. A person of ordinary skill in the art may make changes, modifications, substitutions, and variations of the above embodiments within the scope of the disclosure, and these improvements and embellishments are also considered to be within the scope of protection of the disclosure.

**Claims**

1. A positioning method, applied to a lock end and comprising:

   sending first information and recording a first sending moment of the first information, wherein the first information indicates a key end to execute the following operations: receiving the first information and recording a first receiving moment of the first information; and sending second information to the lock end, wherein the second information comprises request information, a second sending moment of the request information, and the first receiving moment;
   receiving the second information, recording a second receiving moment of the second information, and calculating a difference between the second sending moment and the first receiving moment; and
   calculating, according to the first sending moment, the second receiving moment, and the difference between the second sending moment and the first receiving moment, a distance between the lock end and the key end to implement positioning of the key end or the lock end.

2. The positioning method of claim 1, wherein sending the first information and receiving the second information are repeated; a number of repetitions is *m,* the first sending moment is *Ta(2m-1),* the second receiving moment is *Ta2m,* the first receiving moment is *Tb(2m-1),* the second sending moment is *Tb2m,* and the difference between the second sending moment and the first receiving moment is *Tb(2m)(2m-1)*; and
   calculating, according to the first sending moment, the second receiving moment, and the difference between the second sending moment and the first receiving moment, the distance between the lock end and the key end to implement positioning of the key end or the lock end comprises:
   calculating the distance *S* between the lock end and the key end according to a formula *S=[Ta2-Ta1-Tb21 +... +Ta(2m)-Ta(2m-1)-Tb(2m)(2m-1)]* $\times$*C*$\div$*(2m),* wherein *C* is a propagation speed of a signal in air.

3. The positioning method of claim 1, wherein before sending the first information, the positioning method further comprises:

   receiving third information from the key end and recording a third receiving moment *Ta0* of the third information, wherein the second information further comprises a third sending moment *Tb0* and the third receiving moment *Ta0* of the third information; and
   calculating the distance between the lock end and the key end to implement positioning of the key end or the lock end comprises:
   according to a formula *S=[(Tb1-Tb0)-(Ta1-Ta0)+Ta2-Ta1-Tb21+...+Ta(2m)-Ta(2m-1)-Tb(2m)(2m-1)]*$\times$*C*$\div$*(2m +2).*

4. The positioning method of any one of claims 1 to 3, wherein the lock end comprises *P* positioning modules, P$\geq$3, and the positioning method further comprises:

   calculating a distance between the key end and each of the *P* positioning modules in the lock end; and
   positioning the key end according to the distance between the key end and each of the *P* positioning modules.

5. A positioning method, applied to a key end and comprising:

   receiving first information from a lock end and recording a first receiving moment of the first information; and sending second information to the lock end, wherein the second information comprises request information, a second sending moment of the request information, and the first receiving moment, and the second information indicates the lock end to execute the following operations: receiving the second information, recording a second receiving moment of the second information, and calculating a difference between the second sending moment and the first receiving moment; and calculating a distance between the lock end and the key end according to a first sending moment of the first information, the second receiving moment, and the difference between the second sending moment and the first receiving moment, to implement positioning of the key end or the lock end.

6. The positioning method of claim 5, wherein receiving the first information from the lock end and sending the second information to the lock end are repeated; a number of repetitions is $m$, the first sending moment is $Ta(2m-1)$, the second receiving moment is $Ta2m$, the first receiving moment is $Tb(2m-1)$, the second sending moment is $Tb2m$, and the difference between the second sending moment and the first receiving moment is $Tb(2m)(2m-1)$; and calculating, by the lock end according to the first sending moment, the second receiving moment, and the difference between the second sending moment and the first receiving moment, the distance between the lock end and the key end to implement positioning of the key end or the lock end comprises:
   calculating the distance $S$ between the lock end and the key end according to a formula $S=[Ta2-Ta1-Tb21 +...+Ta(2m)-Ta(2m-1)-Tb(2m)(2m-1)] \times C \div (2m)$, wherein $C$ is a propagation speed of a signal in air.

7. The positioning method of claim 5, wherein before receiving the first information from the lock end, the positioning method further comprises:

   sending third information and recording a third sending moment $Tb0$ of the third information, wherein the second information further comprises the third sending moment $Tb0$ and a third receiving moment $Ta0$ of the third information; and
   calculating the distance between the lock end and the key end to implement positioning of the key end or the lock end comprises:
   according to a formula $S=[ (Tb1-Tb0)-(Ta1-Ta0)+Ta2-Ta1-Tb21+...+Ta(2m)-Ta(2m-1)-Tb(2m)(2m-1)] \times C \div (2m+2)$

8. The positioning method of any one of claims 5 to 7, wherein the lock end comprises $P$ positioning modules, $P \geq 3$, and the positioning method further comprises:

   calculating a distance between the key end and each of the $P$ positioning modules in the lock end; and
   positioning the key end according to the distance between the key end and each of the $P$ positioning modules.

9. A positioning method, applied to a key end and comprising:

   sending fourth information and recording a fourth sending moment of the fourth information, wherein the fourth information indicates a lock end to execute the following operations: receiving the fourth information and recording a fourth receiving moment of the fourth information; and sending fifth information to the key end, wherein the fifth information comprises request information; and recording a fifth sending moment of the request information;
   receiving the fifth information and recording a fifth receiving moment of the fifth information, packing the fifth information, and recording a current time as a sixth sending moment after completion of packing;
   sending sixth information, wherein the sixth information indicates the lock end to execute the following operations: receiving the sixth information and recording a sixth receiving moment of the sixth information, wherein the sixth information comprises request information, a difference between the fifth receiving moment and the fourth sending moment, and a difference between the sixth sending moment and the fifth receiving moment; and
   calculating, according to the difference between the fifth receiving moment and the fourth sending moment, the fourth receiving moment, the fifth sending moment, the sixth receiving moment, and the difference between the sixth sending moment and the fifth receiving moment, a distance between the key end and the lock end to implement positioning of the lock end or the key end.

10. The positioning method of claim 9, wherein sending the fourth information, receiving the fifth information, and sending the sixth information are repeated; a number of repetitions is $m$, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, the difference between the fifth receiving moment $Ta2m$ and the fourth sending moment $Ta(2m-1)$ is $Ta(2m)(2m-1)$, the difference between the sixth sending moment and the fifth receiving moment is $Ta(2m+1)2m$, and the sixth receiving moment is $Tb(2m+1)$; and calculating, according to the difference between the fifth receiving moment and the fourth sending moment, the fourth receiving moment, the fifth sending moment, the sixth receiving moment, and the difference between the sixth sending moment and the fifth receiving moment, the distance between the key end and the lock end to implement positioning of the lock end or the key end comprises:
   calculating the distance $S$ between the lock end and the key end according to a formula $S=\{Ta21-(Tb2-Tb1)+(Tb3-$

Tb2)-Ta32+...+Ta(2m)(2m-1)-[Tb(2m)-Tb(2m-1)]+[Tb(2m+1)-Tb(2m)]-Ta(2m+1)(2m)} $\times C \div (4m)$, wherein $C$ is a propagation speed of a signal in air.

11. The positioning method of claim 9, wherein before sending the fourth information, the positioning method further comprises:

receiving seventh information from the lock end and recording a seventh receiving moment $Ta0$ of the seventh information, wherein the fifth information further comprises a seventh sending moment $Tb0$ and the seventh receiving moment $Ta0$ of the seventh information; and

calculating, according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, the distance between the lock end and the key end to implement positioning of the key end or the lock end comprises:

according to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C \div (4m+4)$.

12. The positioning method of any one of claims 9 to 11, wherein the lock end comprises $P$ positioning modules, $P{\geq}3$, and the positioning method further comprises:

calculating a distance between the key end and each of the $P$ positioning modules in the lock end; and
positioning the key end according to the distance between the key end and each of the $P$ positioning modules in the lock end.

13. A positioning method, applied to a lock end and comprising:

receiving fourth information from a key end and recording a fourth receiving moment of the fourth information;
sending fifth information to the key end and recording a fifth sending moment of the fifth information, wherein the fifth information comprises request information, and the fifth information indicates the key end to execute the following operations: receiving the fifth information and recording a fifth receiving moment of the fifth information, packing the fifth information, and recording a current time as a sixth sending moment after completion of packing; and calculating a difference between the fifth receiving moment of the fifth information and a fourth sending moment of the fourth information and the difference between the fifth receiving moment of the fifth information and the fourth sending moment of the fourth information, and sending sixth information to the lock end;
receiving the sixth information from the key end and recording a sixth receiving moment of the sixth information, wherein the sixth information comprises request information, the difference between the fifth receiving moment and the fourth sending moment, and a difference between the sixth sending moment and the fifth receiving moment; and
calculating, according to the difference between the fifth receiving moment and the fourth sending moment, the fourth receiving moment, the fifth sending moment, the sixth receiving moment, and the difference between the sixth sending moment and the fifth receiving moment, a distance between the key end and the lock end to implement positioning of the lock end or the key end.

14. The positioning method of claim 13, wherein receiving the fourth information from the key end, sending the fifth information, and receiving the sixth information from the key end are repeated; a number of repetitions is $m$, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, the difference between the fifth receiving moment $Ta2m$ and the fourth sending moment $Ta(2m-1)$ is $Ta2m(2m-1)$, the difference between the sixth sending moment and the fifth receiving moment is $Ta(2m+1)2m$, and the sixth receiving moment is $Tb(2m+1)$; and calculating, according to the difference between the fifth receiving moment and the fourth sending moment, the fourth receiving moment, the fifth sending moment, the sixth receiving moment, and the difference between the sixth sending moment and the fifth receiving moment, the distance between the key end and the lock end to implement positioning of the lock end or the key end comprises:
calculating the distance $S$ between the lock end and the key end according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C \div (4m)$, wherein $C$ is a propagation speed of a signal in air.

15. The positioning method of claim 13, wherein before receiving the fourth information from the key end, the positioning method further comprises:

sending seventh information and recording a seventh sending moment $Tb0$ of the seventh information, wherein the fifth information further comprises the seventh sending moment $Tb0$ and a seventh receiving moment $Ta0$ of the seventh information; and
calculating, according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, the distance between the lock end and the key end to implement positioning of the key end or the lock end comprises:
according to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C\div(4m+4)$.

16. The positioning method of any one of claims 13 to 15, wherein the lock end comprises $P$ positioning modules, $P\geq3$, and the positioning method further comprises:

calculating a distance between the key end and each of the $P$ positioning modules in the lock end; and
positioning the key end according to the distance between the key end and each of the $P$ positioning modules in the lock end.

17. A positioning apparatus, applied to a lock end and comprising:

a first sending module configured to send first information to a key end and record a first sending moment of the first information, wherein the first information indicates the key end to execute the following operations: receiving the first information and recording a first receiving moment of the first information; and sending second information to the lock end, wherein the second information comprises request information, a second sending moment of the request information, and the first receiving moment;
a first receiving module configured to receive the second information from the key end and record a second receiving moment of the second information; and
a first calculating module configured to calculate a difference between the second sending moment and the first receiving moment; and calculate, according to the first sending moment, the second receiving moment, and the difference between the second sending moment and the first receiving moment, a distance between the positioning apparatus and the key end to implement positioning of the lock end or the key end.

18. The positioning apparatus of claim 17, wherein the first sending module is configured to repeatedly send the first information, and the first receiving module is configured to repeatedly receive the second information in a synchronous manner; a number of repetitions is $m$, the first sending moment is $Ta(2m-1)$, the second receiving moment is $Ta2m$, the first receiving moment is $Tb(2m-1)$, the second sending moment is $Tb2m$, and the difference between the second sending moment and the first receiving moment is $Tb(2m)(2m-1)$; and
in terms of calculating, according to the first sending moment, the second receiving moment, and the difference between the second sending moment and the first receiving moment, the distance between the positioning apparatus and the key end to implement positioning of the key end or the lock end, the first calculating module is configured to: calculate the distance $S$ between the lock end and the key end according to a formula $S=[Ta2-Ta1-Tb21+...+Ta(2m)-Ta(2m-1)-Tb(2m)(2m-1)]\times C\div(2m)$, wherein $C$ is a propagation speed of a signal in air.

19. The positioning apparatus of claim 17, wherein the first receiving module is further configured to receive third information from the key end and record a third receiving moment $Ta0$ of the third information before the first sending module sends the first information, wherein the second information further comprises a third sending moment $Tb0$ and the third receiving moment $Ta0$ of the third information; and
in terms of calculating the distance between the lock end and the key end to implement positioning of the key end or the lock end, the first calculating module is configured to:
calculate the distance $S$ between the lock end and the key end according to a formula $S=[(Tb1-Tb0)-(Ta1-Ta0)+Ta2-Ta1-Tb21+...+Ta(2m)-Ta(2m-1)-Tb(2m)(2m-1)]\times C\div(2m+2)$, wherein $C$ is a propagation speed of a signal in air.

20. The positioning apparatus of any one of claims 17 to 19, wherein the positioning apparatus further comprises $P$ positioning modules, $P\geq3$, and the first calculating module is further configured to:

calculate a distance between the key end and each of the $P$ positioning modules in the positioning apparatus; and

**EP 4 518 467 A1**

position the key end according to the distance between the key end and each of the $P$ positioning modules.

21. A positioning apparatus, applied to a key end and comprising:

a second receiving module configured to receive first information from a lock end and record a first receiving moment of the first information; and
a second sending module configured to send second information to the lock end, wherein the second information comprises request information, a second sending moment of the request information, and the first receiving moment, and the second information indicates the lock end to execute the following operations: receiving the second information, recording a second receiving moment of the second information, and calculating a difference between the second sending moment and the first receiving moment; and calculating a distance between the lock end and the positioning apparatus according to the first sending moment of the first information, the second receiving moment, and the difference between the second sending moment and the first receiving moment, to implement positioning of the key end or the lock end.

22. The positioning apparatus of claim 21, wherein in the positioning apparatus, the second receiving module is configured to repeatedly receive the first information from the lock end, and repeatedly send second information to the lock end in a synchronous manner; a number of repetitions is $m$, the first sending moment is $Ta(2m\text{-}1)$, the second receiving moment is $Ta2m$, the first receiving moment is $Tb(2m\text{-}1)$, the second sending moment is $Tb2m$, and the difference between the second sending moment and the first receiving moment is $Tb(2m)(2m\text{-}1)$; and
in terms of calculating, according to the first sending moment, the second receiving moment, and the difference between the second sending moment and the first receiving moment, the distance between the lock end and the positioning apparatus to implement positioning of the key end or the lock end comprises, the lock end is configured to: calculate the distance $S$ between the lock end and the positioning apparatus according to a formula $S=[Ta2\text{-}Ta1\text{-}Tb21+...+Ta(2m)\text{-}Ta(2m\text{-}1)\text{-}Tb(2m)(2m\text{-}1)] \times C\div(2m)$, wherein $C$ is a propagation speed of a signal in air.

23. The positioning apparatus of claim 21, wherein the second sending module is further configured to send third information to the lock end and record a third sending moment $Tb0$ of the third information before the positioning apparatus receives the first information from the lock end, wherein the second information further comprises the third sending moment $Tb0$ and a third receiving moment $Ta0$ of the third information; and
in terms of calculating the distance between the lock end and the positioning apparatus to implement positioning of the key end or the lock end, the lock end is configured to:

according to a formula $S=[\ (Tb1\text{-}Tb0)\text{-}(Ta1\text{-}Ta0)+Ta2\text{-}Ta1\text{-}Tb21+...+Ta(2m)\text{-}Ta(2m\text{-}1)\text{-}Tb(2m)(2m\text{-}1)] \times C\div(2m+2)$

24. The positioning apparatus of any one of claims 21 to 23, wherein the lock end further comprises $P$ positioning modules, $P\geq3$, and the lock end is further configured to:

calculate a distance between the positioning apparatus and each of the $P$ positioning modules in the lock end; and
position the key end according to the distance between the positioning apparatus and each of the $P$ positioning modules.

25. A positioning apparatus, applied to a key end and comprising a third sending module, a third receiving module, and a third calculating module, wherein

the third sending module is configured to send fourth information to a lock end and record a fourth sending moment of the fourth information, wherein the fourth information indicates the lock end to execute the following operations: receiving the fourth information, recording a fourth receiving moment of the fourth information, and sending fifth information to the key end, wherein the fifth information comprises request information; and recording a fifth sending moment of the request information;
the third receiving module is configured to receive the fifth information from the lock end and record a fifth receiving moment of the fifth information, pack the fifth information, and record a current time as a sixth sending moment after completion of packing;
the third sending module is further configured to send sixth information to the lock end, wherein the sixth information indicates the lock end to execute the following operations: receiving the sixth information and recording a sixth receiving moment of the sixth information, wherein the sixth information comprises request information, a difference between the fifth receiving moment and the fourth sending moment, and a difference

34

between the sixth sending moment and the fifth receiving moment; and

the third calculating module is configured to calculate the difference between the fifth receiving moment and the fourth sending moment and the difference between the sixth sending moment and the fifth receiving moment; and the lock end is configured to calculate, according to the difference between the fifth receiving moment and the fourth sending moment, the fourth receiving moment, the fifth sending moment, the sixth receiving moment, and the difference between the sixth sending moment and the fifth receiving moment, a distance between the positioning apparatus and the lock end to implement positioning of the lock end or the key end.

26. The positioning apparatus of claim 25, wherein the third sending module is configured to repeatedly send the fourth information, the third receiving module is configured to repeatedly receive the fifth information in a synchronous manner, and the third sending module is further configured to repeatedly send the sixth information; a number of repetitions is $m$, the fourth sending moment is $Ta(2m\text{-}1)$, the fourth receiving moment is $Tb(2m\text{-}1)$, the fifth sending moment is $Tb2m$, the fifth receiving moment is $Ta2m$, the sixth sending moment is $Ta(2m+1)$, and the sixth receiving moment is $Tb(2m+1)$; and the third calculating module is configured to calculate the difference $Ta(2m)(2m\text{-}1)$ between the fifth receiving moment $Ta2m$ and the fourth sending moment $Ta(2m\text{-}1)$ and the difference $Ta(2m+1)2m$ between the sixth sending moment and the fifth receiving moment; and

in terms of calculating, according to the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the lock end to implement positioning of the lock end or the key end, the lock end is configured to:

calculate the distance S between the lock end and the key end according to a formula $S=\{Ta21\text{-}(Tb2\text{-}Tb1)+(Tb3\text{-}Tb2)\text{-}Ta32+...+Ta(2m)(2m\text{-}1)\text{-}[Tb(2m)\text{-}Tb(2m\text{-}1)]+[Tb(2m+1)\text{-}Tb(2m)]\text{-}Ta(2m+1)(2m)\}\times C\div(4m)$, wherein $C$ is a propagation speed of a signal in air.

27. The positioning apparatus of claim 25, wherein the third receiving module is further configured to receive seventh information from the lock end and record a seventh receiving moment $Ta0$ of the seventh information before the third sending module sends the fourth information, wherein the fifth information further comprises a seventh sending moment $Tb0$ and the seventh receiving moment $Ta0$ of the seventh information; and

in terms of calculating, according to the seventh sending moment $Tb0$, the seventh receiving moment $Ta0$, the fourth sending moment, the difference between the fifth sending moment and the fourth receiving moment, the difference between the sixth sending moment and the fifth receiving moment, and the sixth receiving moment, the distance between the lock end and the positioning apparatus to implement positioning of the key end or the lock end, the lock end is configured to:

calculate the distance $S$ between the lock end and the key end according to a formula $S=\{(Tb1\text{-}Tb0)\text{-}(Ta1\text{-}Ta0)+(Ta2\text{-}Ta1)\text{-}(Tb2\text{-}Tb1)+Ta21\text{-}(Tb2\text{-}Tb1)+(Tb3\text{-}Tb2)\text{-}Ta32+....+Ta(2m)(2m\text{-}1)\text{-}[Tb(2m)\text{-}Tb(2m\text{-}1)]+[Tb(2m+1)\text{-}Tb(2m)]\text{-}Ta(2m+1)(2m)\}\times C\div(4m+4)$, wherein $C$ is a propagation speed of a signal in air.

28. The positioning apparatus of any one of claims 25 to 27, wherein the lock end comprises $P$ positioning modules, $P\geq 3$, and the lock end is further configured to:

calculate a distance between the positioning apparatus and each of the $P$ positioning modules in the lock end; and

position the key end according to the distance between the positioning apparatus and each of the $P$ positioning modules in the lock end.

29. A positioning apparatus, applied to a lock end and comprising a fourth sending module, a fourth receiving module, and a fourth calculating module, wherein

the fourth receiving module is configured to receive fourth information from a key end and record a fourth receiving moment of the fourth information;

the fourth sending module is configured to send fifth information to the key end and record a fifth sending moment of the fifth information, wherein the fifth information comprises request information, and the fifth information indicates the key end to execute the following operations: receiving the fifth information and recording a fifth receiving moment of the fifth information, packing the fifth information, and recording a current time as a sixth sending moment after completion of packing; calculating a difference between the fifth receiving moment of the fifth information and a fourth sending moment of the fourth information and the difference between the fifth receiving moment of the fifth information and the fourth sending moment of the fourth information; and sending sixth information to the positioning apparatus;

the fourth receiving module is further configured to receive the sixth information from the key end and record a sixth receiving moment of the sixth information, wherein the sixth information comprises request information, the difference between the fifth receiving moment and the fourth sending moment, and a difference between the sixth sending moment and the fifth receiving moment; and

the fourth calculating module is configured to calculate, according to the difference between the fifth receiving moment and the fourth sending moment, the fourth receiving moment, the fifth sending moment, the sixth receiving moment, and the difference between the sixth sending moment and the fifth receiving moment, a distance between the positioning apparatus and the key end to implement positioning of the lock end or the key end.

30. The positioning apparatus of claim 29, wherein the fourth receiving module is configured to repeatedly receive the fourth information from the key end, the fourth sending module is configured to repeatedly send the fifth information to the key end in a synchronous manner, and the fourth receiving module is further configured to repeatedly receive the sixth information from the key end; a number of repetitions is $m$, the fourth sending moment is $Ta(2m-1)$, the fourth receiving moment is $Tb(2m-1)$, the fifth sending moment is $Tb2m$, the fifth receiving moment is $Ta2m$, the sixth sending moment is $Ta(2m+1)$, and the sixth receiving moment is $Tb(2m+1)$; and the fourth calculating module is configured to calculate the difference $Ta2m(2m-1)$ between the fifth receiving moment $Ta2m$ and the fourth sending moment $Ta(2m-1)$ and the difference $Ta(2m+1)2m$ between the sixth sending moment and the fifth receiving moment; and in terms of calculating, according to the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the key end to implement positioning of the lock end or the key end, the fourth calculating module is configured to:

calculate the distance $S$ between the lock end and the key end according to a formula $S=\{Ta21-(Tb2-Tb1)+(Tb3-Tb2)-Ta32+...+Ta(2m)(2m-1)-[Tb(2m)-Tb(2m-1)]+[Tb(2m+1)-Tb(2m)]-Ta(2m+1)(2m)\}\times C \div (4m)$, wherein $C$ is a propagation speed of a signal in air.

31. The positioning apparatus of claim 29, wherein the fourth sending module is configured to send seventh information to the key end and record a seventh sending moment $Tb0$ of the seventh information before the fourth receiving module receives the fourth information from the key end, wherein the fifth information further comprises the seventh sending moment $Tb0$ and a seventh receiving moment $Ta0$ of the seventh information; and

in terms of calculating, according to the seventh sending moment $Tb0$, the seventh receiving moment $Ta0$, the difference between the fifth receiving moment and the fourth sending moment, the fourth receiving moment, the fifth sending moment, the sixth receiving moment, and the difference between the sixth sending moment and the fifth receiving moment, the distance between the positioning apparatus and the key end to implement positioning of the key end or the lock end, the fourth calculating module is configured to:

according to a formula $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+[Tb(2m+1)-Tb(2m)]-Ta(2m+1)(2m)\}\times C \div (4m+4)$.

32. The positioning apparatus of any one of claims 29 to 31, wherein the positioning apparatus comprises $P$ positioning modules, $P \geq 3$, and the fourth calculating module is further configured to:

calculate a distance between the key end and each of the $P$ positioning modules in the positioning apparatus; and
position the key end according to the distance between the key end and each of the $P$ positioning modules in the positioning apparatus.

33. A computer-readable storage medium configured to store computer-executable program codes, wherein the computer-executable program codes are configured to cause a computer to perform the positioning method of any one of claims 1 to 16.

34. A vehicle comprising a memory and a processor electrically connected with the memory, wherein the memory is configured to store program codes executable by the processor, and the program codes which, when invoked and executed by the processor, are operable to perform the positioning method of any one of claims 1 to 16.

35. A positioning method, applied to a lock end, wherein the lock end comprises a plurality of antenna modules, and the method comprises:

receiving request information from a key end and calculating a receiving moment for reception of the request information by each of the plurality of antenna modules, wherein the request information comprises positioning information; and

calculating, according to coordinates of each of the plurality of antenna modules in a preset coordinate system and the receiving moment for each of the plurality of antenna modules, coordinates of the key end to implement positioning of the key end.

36. The positioning method of claim 35, wherein the lock end comprises a first antenna module, a second antenna module, and a third antenna module; calculating the receiving moment for reception of the request information by each of the plurality of antenna modules comprises calculating a first receiving moment $Ta$ for the first antenna module, a second receiving moment $Tb$ for the second antenna module, and a third receiving moment $Tc$ for the third antenna module respectively; and

calculating, according to the coordinates of each of the plurality of antenna modules in the preset coordinate system and the receiving moment for each of the plurality of antenna modules, the coordinates of the key end comprises:

taking a point in the lock end as an origin, coordinates of the first antenna module as ($Xa, Ya, Za$), coordinates of the second antenna module as ($Xb, Yb, Zb$), and coordinates of the third antenna module as ($Xc, Yc, Zc$); and calculating coordinates ($Xk, Yk, Zk$) of the key end in the preset coordinate system according to the following formula:

$$|Ta\text{-}Tb|\times C=|\sqrt{(Xk-Xa)^2+(Yk-Ya)^2+(Zk-Za)^2}-\sqrt{(Xk-Xb)^2+(Yk-Yb)^2+(Zk-Zb)^2}|;$$

$$|Tb\text{-}Tc|\times C=|\sqrt{(Xk-Xb)^2+(Yk-Yb)^2+(Zk-Zb)^2}-\sqrt{(Xk-Xc)^2+(Yk-Yc)^2+(Zk-Zc)^2}|;$$

$$|Tc\text{-}Ta|\times C=|\sqrt{(Xk-Xc)^2+(Yk-Yc)^2+(Zk-Zc)^2}-\sqrt{(Xk-Xa)^2+(Yk-Ya)^2+(Zk-Za)^2}|;$$

wherein $C$ is a propagation speed of a signal in air.

37. The positioning method of claim 35, wherein the lock end further comprises a control module, and the control module is in communication connection with each of the plurality of antenna modules via a cable; calculating the receiving moment for reception of the request information by each of the plurality of antenna modules comprises:

recording an acquiring moment at which reception of the request information by each of the plurality of antenna modules is acquired by the control module; and
calculating, according to a length $L$ of the cable between the control module and each of the plurality of antenna modules and the acquiring moment $T'$, the receiving moment $T$ for each of the plurality of antenna modules according to a formula $T = T' - L \div V_0$, wherein $V_0$ is a propagation speed of positioning information in the cable.

38. The positioning method of claim 35, wherein the lock end is a vehicle, each of the plurality of antenna modules comprises an interior antenna module and an exterior antenna module, the interior antenna module is positioned inside the vehicle, the exterior antenna module is positioned outside the vehicle, and the positioning method further comprises:

determining, according to the coordinates of the key end, whether the key end is positioned inside or outside the vehicle, wherein the exterior antenna module is configured for communication connection with the key end in response to the key end being positioned outside the vehicle, and the interior antenna module is configured for communication connection with the key end in response to the key end being positioned inside the vehicle; and
enabling, according to the coordinates of the key end, the vehicle to open a door closest to the key end in response to the key end being positioned outside the vehicle and a distance between the key end and the vehicle being within a preset range; and enabling an engine of the vehicle in response to the key end being positioned inside the vehicle and the key end being determined to be in a driving position.

39. The positioning method of claim 38, wherein in response to the key end being positioned outside the vehicle and the distance between the key end and the vehicle being outside the preset range, the positioning method further comprises:

detecting a living being inside the vehicle;
wherein detecting the living being inside the vehicle comprises:

sending, by the interior antenna module, first ultra-wideband (UWB) information;
receiving second UWB information, wherein the second UWB information is UWB information to be reflected by an object in the lock end; and
determining, according to the second UWB information, whether the living being exists in the lock end.

40. A positioning apparatus, applied to a lock end and comprising a receiving module and an analyzing and calculating module, wherein

the receiving module comprises a plurality of antenna modules and is configured to receive request information from a key end, wherein the request information comprises positioning information;
the analyzing and calculating module is configured to calculate a receiving moment for reception of the request information by each of the plurality of antenna modules; and
the analyzing and calculating module is further configured to calculate, according to coordinates of each of the plurality of antenna modules in a preset coordinate system and the receiving moment for each of the plurality of antenna modules, coordinates of the key end to implement positioning of the key end.

41. The positioning apparatus of claim 40, wherein the receiving module comprises a first antenna module, a second antenna module, and a third antenna module; the analyzing and calculating module is configured to calculate a first receiving moment $Ta$ for the first antenna module, a second receiving moment $Tb$ for the second antenna module, and a third receiving moment $Tc$ for the third antenna module respectively; and
the analyzing and calculating module is further configured to take a point in the lock end as an origin, coordinates of the first antenna module as ($Xa, Ya, Za$), coordinates of the second antenna module as ($Xb, Yb, Zb$), coordinates of the third antenna module as ($Xc, Yc, Zc$), and the coordinates of the key end as ($Xk, Yk, Zk$); and calculate the coordinates of the key end according to the following formula:

$$|Ta\text{-}Tb|\times C=|\sqrt{(Xk-Xa)^2+(Yk-Ya)^2+(Zk-Za)^2}-\sqrt{(Xk-Xb)^2+(Yk-Yb)^2+(Zk-Zb)^2}|;$$

$$|Tb\text{-}Tc|\times C=|\sqrt{(Xk-Xb)^2+(Yk-Yb)^2+(Zk-Zb)^2}-\sqrt{(Xk-Xc)^2+(Yk-Yc)^2+(Zk-Zc)^2}|;$$

$$|Tc\text{-}Ta|\times C=|\sqrt{(Xk-Xc)^2+(Yk-Yc)^2+(Zk-Zc)^2}-\sqrt{(Xk-Xa)^2+(Yk-Ya)^2+(Zk-Za)^2}|;$$

wherein $C$ is a propagation speed of a signal in air.

42. The positioning apparatus of claim 40, wherein the analyzing and calculating module is further configured to:

record an acquiring moment at which reception of the request information by each of the plurality of antenna modules is acquired; and
calculate, according to a distance $L$ of a cable between the analyzing and calculating module and each of the plurality of antenna modules and the acquiring moment $T'$, the receiving moment $T$ for each of the plurality of antenna modules according to a formula $T = T' - L \div V_0$, wherein $V_0$ is a propagation speed of positioning information at the lock end.

43. The positioning apparatus of claim 40, wherein the lock end is a vehicle, each of the plurality of antenna modules comprises an interior antenna module and an exterior antenna module, the interior antenna module is positioned inside the vehicle, the exterior antenna module is positioned outside the vehicle, and the positioning apparatus is further configured to:

determine, according to the coordinates of the key end, whether the key end is positioned inside or outside the vehicle, wherein the exterior antenna module is configured for communication connection with the key end in

EP 4 518 467 A1

response to the key end being positioned outside the vehicle, and

the interior antenna module is configured for communication connection with the key end in response to the key end being positioned inside the vehicle; and

the positioning apparatus is configured to enable, according to the coordinates of the key end, the vehicle to open a door closest to the key end in response to the key end being positioned outside the vehicle and a distance between the key end and the vehicle being within a preset range; and enable an engine of the vehicle in response to the key end being positioned inside the vehicle and the key end being determined to be in a driving position.

44. The positioning apparatus of claim 43, wherein the positioning apparatus is further configured to detect a living being inside the vehicle in response to the key end being positioned outside the vehicle and the distance between the key end and the vehicle being outside the preset range; in terms of detecting the living being inside the vehicle,

the interior antenna module is configured to send first ultra-wideband (UWB) information;

the interior antenna module is further configured to receive second UWB information, wherein the second UWB information is UWB information to be reflected by an object in the lock end; and

the analyzing and calculating module is further configured to determine, according to the second UWB information, whether the living being exists in the lock end.

45. A computer-readable storage medium configured to store computer-executable program codes, wherein the computer-executable program codes are configured to cause a computer to perform the positioning method of any one of claims 35 to 39.

46. A vehicle comprising a memory and a processor electrically connected with the memory, wherein the memory is configured to store program codes executable by the processor, and the program codes which, when invoked and executed by the processor, are operable to perform the positioning method of any one of claims 35 to 39.

39

SEND FIRST INFORMATION AND RECORD FIRST SENDING MOMENT OF FIRST INFORMATION, WHERE FIRST INFORMATION INDICATES KEY END TO EXECUTE FOLLOWING OPERATIONS: RECEIVE FIRST INFORMATION AND RECORD FIRST RECEIVING MOMENT OF FIRST INFORMATION; AND SEND SECOND INFORMATION TO LOCK END, WHERE SECOND INFORMATION INCLUDES REQUEST INFORMATION, SECOND SENDING MOMENT OF REQUEST INFORMATION, AND FIRST RECEIVING MOMENT

S101

RECEIVE SECOND INFORMATION, RECORD SECOND RECEIVING MOMENT OF SECOND INFORMATION, AND CALCULATE DIFFERENCE BETWEEN SECOND SENDING MOMENT AND FIRST RECEIVING MOMENT

S102

CALCULATE DISTANCE BETWEEN LOCK END AND KEY END ACCORDING TO FIRST SENDING MOMENT, SECOND RECEIVING MOMENT, AND DIFFERENCE BETWEEN SECOND SENDING MOMENT AND FIRST RECEIVING MOMENT, TO IMPLEMENT POSITIONING OF KEY END OR LOCK END

S103

FIG. 1

SENDING FIRST INFORMATION AND RECEIVING SECOND INFORMATION ARE REPEATED, NUMBER OF REPETITIONS IS $m$, FIRST SENDING MOMENT IS $Ta(2m\text{-}1)$, SECOND RECEIVING MOMENT IS $Ta2m$, FIRST RECEIVING MOMENT IS $Tb(2m\text{-}1)$, SECOND SENDING MOMENT IS $Tb2m$, AND DIFFERENCE BETWEEN SECOND SENDING MOMENT AND FIRST RECEIVING MOMENT IS $Tb(2m)(2m\text{-}1)$

S201

DISTANCE $S$ BETWEEN LOCK END AND KEY END IS CALCULATED ACCORDING TO FIRST SENDING MOMENT, SECOND RECEIVING MOMENT, AND DIFFERENCE BETWEEN SECOND SENDING MOMENT AND FIRST RECEIVING MOMENT AND ACCORDING TO FORMULA $S=[Ta2\text{-}Ta1\text{-}Tb21+...+Ta(2m)\text{-}Ta(2m\text{-}1)\text{-}Tb(2m)(2m\text{-}1)]\times C\div(2m)$, WHERE $C$ IS PROPAGATION SPEED OF SIGNAL IN AIR

S202

FIG. 2

BEFORE SENDING FIRST INFORMATION,

RECEIVE THIRD INFORMATION FROM KEY END AND RECORD THIRD RECEIVING MOMENT $Ta0$ OF THIRD INFORMATION, WHERE SECOND INFORMATION FURTHER INCLUDES THIRD SENDING MOMENT $Tb0$ AND THIRD RECEIVING MOMENT $Ta0$ OF THIRD INFORMATION

S301

CALCULATE DISTANCE $S$ BETWEEN LOCK END AND KEY END ACCORDING TO FIRST SENDING MOMENT, SECOND RECEIVING MOMENT, DIFFERENCE BETWEEN SECOND SENDING MOMENT AND FIRST RECEIVING MOMENT, THIRD SENDING MOMENT $Tb0$, AND THIRD RECEIVING MOMENT $Ta0$ AND ACCORDING TO FORMULA $S=[(Tb1\text{-}Tb0)\text{-}(Ta1\text{-}Ta0)+Ta2\text{-}Ta1\text{-}Tb21+...+Ta(2m)\text{-}Ta(2m\text{-}1)\text{-}Tb(2m)(2m\text{-}1)]\times C\div(2m+2)$, WHERE $C$ IS PROPAGATION SPEED OF SIGNAL IN AIR

S302

FIG. 3

EP 4 518 467 A1

SEND FOURTH INFORMATION AND RECORD FOURTH SENDING MOMENT OF FOURTH INFORMATION, WHERE FOURTH INFORMATION INDICATES LOCK END TO EXECUTE FOLLOWING OPERATIONS: RECEIVE FOURTH INFORMATION AND RECORD FOURTH RECEIVING MOMENT OF FOURTH INFORMATION; AND SEND FIFTH INFORMATION TO KEY END, WHERE FIFTH INFORMATION INCLUDES REQUEST INFORMATION; AND RECORD FIFTH SENDING MOMENT OF REQUEST INFORMATION — S401

RECEIVE FIFTH INFORMATION AND RECORD FIFTH RECEIVING MOMENT OF THE FIFTH INFORMATION, PACK FIFTH INFORMATION, AND RECORD CURRENT TIME AS SIXTH SENDING MOMENT AFTER COMPLETION OF PACKING — S402

SEND SIXTH INFORMATION, WHERE SIXTH INFORMATION INDICATES LOCK END TO EXECUTE FOLLOWING OPERATIONS: RECEIVE SIXTH INFORMATION AND RECORD SIXTH RECEIVING MOMENT OF SIXTH INFORMATION, WHERE SIXTH INFORMATION INCLUDES REQUEST INFORMATION, DIFFERENCE BETWEEN FIFTH RECEIVING MOMENT AND FOURTH SENDING MOMENT, AND DIFFERENCE BETWEEN SIXTH SENDING MOMENT AND FIFTH RECEIVING MOMENT — S403

CALCULATE DISTANCE BETWEEN KEY END AND LOCK END ACCORDING TO DIFFERENCE BETWEEN FIFTH RECEIVING MOMENT AND FOURTH SENDING MOMENT, FOURTH RECEIVING MOMENT, FIFTH SENDING MOMENT, SIXTH RECEIVING MOMENT, AND DIFFERENCE BETWEEN SIXTH SENDING MOMENT AND FIFTH RECEIVING MOMENT, TO IMPLEMENT POSITIONING OF LOCK END OR KEY END — S404

FIG. 4

42

SENDING FOURTH INFORMATION, RECEIVING FIFTH INFORMATION, AND SENDING SIXTH INFORMATION ARE REPEATED;

NUMBER OF REPETITIONS IS $m$,

FOURTH SENDING MOMENT IS $Ta(2m\text{-}1)$, FOURTH RECEIVING MOMENT IS $Tb(2m\text{-}1)$,

FIFTH SENDING MOMENT IS $Tb2m$, FIFTH RECEIVING MOMENT IS $Ta2m$,

SIXTH SENDING MOMENT IS $Ta(2m\text{+}1)$, SIXTH RECEIVING MOMENT IS $Tb(2m\text{+}1)$,

DIFFERENCE BETWEEN FIFTH RECEIVING MOMENT $Ta2m$ AND FOURTH SENDING MOMENT $Ta(2m\text{-}1)$ IS $Ta(2m)(2m\text{-}1)$,

DIFFERENCE BETWEEN SIXTH SENDING MOMENT AND FIFTH RECEIVING MOMENT IS $Ta(2m\text{+}1)2m$; — S501

DISTANCE $S$ BETWEEN KEY END AND LOCK END IS CALCULATED ACCORDING TO DIFFERENCE BETWEEN FIFTH RECEIVING MOMENT AND FOURTH SENDING MOMENT, FOURTH RECEIVING MOMENT, FIFTH SENDING MOMENT, SIXTH RECEIVING MOMENT, AND DIFFERENCE BETWEEN SIXTH SENDING MOMENT AND FIFTH RECEIVING MOMENT AND ACCORDING TO FORMULA $S=\{Ta21\text{-}(Tb2\text{-}Tb1)\text{+}(Tb3\text{-}Tb2)\text{-}Ta32\text{+}...\text{+}Ta(2m)(2m\text{-}1)\text{-}[Tb(2m)\text{-}Tb(2m\text{-}1)]\text{+}[Tb(2m\text{+}1)\text{-}Tb(2m)]\text{-}Ta(2m\text{+}1)(2m)\}\times C\div(4m)$, WHERE $C$ IS PROPAGATION SPEED OF SIGNAL IN AIR — S502

FIG. 5

BEFORE SENDING FOURTH INFORMATION,

RECEIVE SEVENTH INFORMATION FROM LOCK END AND RECORD SEVENTH RECEIVING MOMENT $Ta0$ OF SEVENTH INFORMATION, WHERE FIFTH INFORMATION FURTHER INCLUDES SEVENTH SENDING MOMENT $Tb0$ AND SEVENTH RECEIVING MOMENT $Ta0$ OF SEVENTH INFORMATION

S601

CALCULATE DISTANCE $S$ BETWEEN LOCK END AND KEY END ACCORDING TO SEVENTH SENDING MOMENT $Tb0$, SEVENTH RECEIVING MOMENT $Ta0$, FOURTH RECEIVING MOMENT, FIFTH SENDING MOMENT , SIXTH RECEIVING MOMENT, DIFFERENCE BETWEEN FIFTH RECEIVING MOMENT AND FOURTH SENDING MOMENT, AND DIFFERENCE BETWEEN SIXTH SENDING MOMENT AND FIFTH RECEIVING MOMENT A N D ACCORDING TO FORMULA $S=\{(Tb1-Tb0)-(Ta1-Ta0)+(Ta2-Ta1)-(Tb2-Tb1)+Ta21-(Tb2-Tb1)+(Tb3-Tb2)-Ta32+....+Ta(2m)(2m-1)-[Tb(2m)-Tb(2m-1)]+ [Tb(2m+1)-Tb(2m) ]-Ta(2m+1)(2m)\}\times C \div (4m+4)$, WHERE $C$ IS PROPAGATION SPEED OF SIGNAL IN AIR

S602

FIG. 6

FIG. 7

```
                    ┌─────────────┐
                    │    Start    │
                    └──────┬──────┘
                           │
                           ▼
        ┌──────────────────────────────────┐
        │ A Bluetooth device is in a low-power │◄─────┐
        │ sleep mode and periodically detects a │      │
        │     Bluetooth connection request     │      │
        └──────────────────┬──────────────────┘      │
                           │                          │
                           ▼                          │ NO
                  ╱─────────────────╲                 │
                 ╱ A Bluetooth connection╲            │
                ╱  request is detected by the ╲───────┘
                ╲   Bluetooth device?        ╱
                 ╲─────────────────────────╱
                           │
                          YES
                           ▼
        ┌──────────────────────────────────────┐
        │ The Bluetooth device stops periodically detecting the │
        │  Bluetooth connection request, and at the same time, the │
        │  Bluetooth device authenticates the key end and powers up │
        │  the wideband device after the authentication is approved │
        └──────────────────┬───────────────────┘
                           │
                           ▼
        ┌──────────────────────────────────────┐
        │   The key end sends a signal to each of P positioning │
        │  modules in the electronic device, and the electronic device │
        │  uses a multi-pass ranging algorithm to calculate a distance │
        │  between the electronic device and each of activity modules │
        └──────────────────┬───────────────────┘
                           │
                           ▼
        ┌──────────────────────────────────────┐
        │ The electronic device uses a distance algorithm to calculate │
        │  a position of each of the activity modules according to the │
        │    distance between the electronic device and each of the │
        │      activity modules and a distance between a slave │
        │  communication module and each of the activity modules │
        └──────────────────────────────────────┘
```

FIG. 8

FIG. 9

PROCESSOR

210

200

MEMORY

220

FIG. 10

KEY END SENDS REQUEST INFORMATION TO LOCK END, AND LOCK END RECEIVES REQUEST INFORMATION FROM KEY END AND CALCULATES RECEIVING MOMENT FOR RECEPTION OF REQUEST INFORMATION BY EACH OF MULTIPLE ANTENNA MODULES, WHERE REQUEST INFORMATION INCLUDES POSITIONING INFORMATION

S101

AFTER RECEIVING POSITIONING-REQUEST INFORMATION FROM KEY END, IN RESPONSE TO POSITIONING-REQUEST INFORMATION, LOCK END CALCULATES COORDINATES OF KEY END ACCORDING TO COORDINATES OF EACH OF MULTIPLE ANTENNA MODULES IN PRESET COORDINATE SYSTEM AND RECEIVING MOMENT FOR EACH OF MULTIPLE ANTENNA MODULES, TO IMPLEMENT POSITIONING OF KEY END

S102

FIG. 11

RECEIVE, BY LOCK END, REQUEST INFORMATION FROM KEY END, AND CALCULATE FIRST RECEIVING MOMENT *Ta* FOR FIRST ANTENNA MODULE, SECOND RECEIVING MOMENT *Tb* FOR SECOND ANTENNA MODULE, AND THIRD RECEIVING MOMENT *Tc* FOR THIRD ANTENNA MODULE RESPECTIVELY

S201

TAKE POINT IN LOCK END AS ORIGIN, COORDINATES OF FIRST ANTENNA MODULE AS (*Xa, Ya, Za*), COORDINATES OF SECOND ANTENNA MODULE AS (*Xb, Yb, Zb*), AND COORDINATES OF THIRD ANTENNA MODULE AS (*Xc, Yc, Zc*)

S202

CALCULATE COORDINATES (*Xk, Yk, Zk*) OF KEY END IN PRESET COORDINATE SYSTEM ACCORDING TO FOLLOWING FORMULA:

$$|Ta\text{-}Tb|\times C = \left|\sqrt{(Xk - Xa)^2 + (Yk - Ya)^2 + (Zk - Za)^2} - \sqrt{(Xk - Xb)^2 + (Yk - Yb)^2 + (Zk - Zb)^2}\right|;$$

$$|Tb\text{-}Tc|\times C = \left|\sqrt{(Xk - Xb)^2 + (Yk - Yb)^2 + (Zk - Zb)^2} - \sqrt{(Xk - Xc)^2 + (Yk - Yc)^2 + (Zk - Zc)^2}\right|;$$

$$|Tc\text{-}Ta|\times C = \left|\sqrt{(Xk - Xc)^2 + (Yk - Yc)^2 + (Zk - Zc)^2} - \sqrt{(Xk - Xa)^2 + (Yk - Ya)^2 + (Zk - Za)^2}\right|;$$

WHERE *C* IS PROPAGATION SPEED OF SIGNAL IN AIR

S203

FIG. 12

RECEIVE, BY LOCK END, REQUEST INFORMATION FROM KEY END, AND RECORD ACQUIRING MOMENT AT WHICH RECEPTION OF REQUEST INFORMATION BY EACH OF MULTIPLE ANTENNA MODULES IS ACQUIRED

S301

CALCULATE RECEIVING MOMENT $T$ FOR EACH OF MULTIPLE ANTENNA MODULES ACCORDING TO LENGTH $L$ OF CABLE BETWEEN CONTROL MODULE AND EACH OF MULTIPLE ANTENNA MODULES , ACQUIRING MOMENT $T'$, AND PROPAGATION SPEED $V_0$ OF POSITIONING INFORMATION IN CABLE AND ACCORDING TO FORMULA $T = T' - L \div V_0$

S302

CALCULATE COORDINATES OF KEY END ACCORDING TO COORDINATES OF EACH OF MULTIPLE ANTENNA MODULES IN PRESET COORDINATE SYSTEM AND RECEIVING MOMENT FOR EACH OF MULTIPLE ANTENNA MODULES, TO IMPLEMENT POSITIONING OF KEY END

S303

FIG. 13

VEHICLE RECEIVES REQUEST INFORMATION FROM KEY END AND CALCULATES RECEIVING MOMENT FOR RECEPTION OF REQUEST INFORMATION BY EACH ANTENNA MODULE, CALCULATES COORDINATES OF KEY END ACCORDING TO COORDINATES OF EACH ANTENNA MODULE IN PRESET COORDINATE SYSTEM AND RECEIVING MOMENT FOR EACH ANTENNA MODULE, AND DETERMINES WHETHER KEY END IS POSITIONED INSIDE OR OUTSIDE VEHICLE ACCORDING TO COORDINATES OF KEY END

S401

WHEN KEY END IS POSITIONED OUTSIDE VEHICLE AND DISTANCE BETWEEN KEY END AND VEHICLE IS WITHIN PRESET RANGE, VEHICLE IS ENABLED, ACCORDING TO COORDINATES OF KEY END, TO OPEN DOOR CLOSEST TO KEY END; WHEN KEY END IS POSITIONED INSIDE VEHICLE AND KEY END IS DETERMINED TO BE IN DRIVING POSITION, ENGINE OF VEHICLE IS ENABLED

S402

FIG. 14

VEHICLE SENDS, THROUGH INTERIOR ANTENNA MODULE, FIRST UWB INFORMATION TOWARDS INSIDE OF VEHICLE

S501

INTERIOR ANTENNA MODULE RECEIVES SECOND UWB INFORMATION, WHERE SECOND UWB INFORMATION IS UWB INFORMATION TO BE REFLECTED BY OBJECT IN LOCK END

S502

VEHICLE DETERMINES, ACCORDING TO SECOND UWB INFORMATION, WHETHER LIVING BEING EXISTS IN LOCK END

S503

FIG. 15

```
        ┌──────────┐
        │  Start   │
        └──────────┘
             │
             ▼
┌───────────────────────────────────┐
│ A Bluetooth device is in a low-power │
│ sleep mode and periodically detects a │◄─────┐
│   Bluetooth connection request      │      │
└───────────────────────────────────┘      │
             │                              │ NO
             ▼                              │
        ◇ A Bluetooth connection ◇─────────┘
          request is detected by the
          Bluetooth device?
             │
           YES
             ▼
┌───────────────────────────────────────────┐
│ The Bluetooth device stops periodically detecting the Bluetooth │
│ connection request, and at the same time, the Bluetooth device │
│ authenticates the key end and powers up the receiving module and │
│ the analyzing and calculating module after the authentication is │
│                    approved                    │
└───────────────────────────────────────────┘
             │
             ▼
┌───────────────────────────────────────────┐
│ Multiple antenna modules in the receiving module receive request │
│ information from the key end, the analyzing and calculating │
│ module calculates, according to a calibrated-length algorithm for a │
│ cable length between the analyzing and calculating module and │
│ each antenna module, a receiving moment for reception of the │
│ request information by each of the multiple antenna modules │
└───────────────────────────────────────────┘
             │
             ▼
┌───────────────────────────────────────────┐
│ The positioning device establishes a coordinate system and │
│ calculates coordinates of the key end, to implement positioning of │
│                  the key end                  │
└───────────────────────────────────────────┘
```

FIG. 16

The positioning apparatus detects a connection request from the key end, and after the authentication is approved, the positioning apparatus calculates and obtains the precise coordinates of the key end in the coordinate system

NO

Whether the key end is near a primary driver door

YES

Inform the vehicle body to open the primary driver door

The key end is within a primary driving range inside the vehicle

The key end is far away from the vehicle

The engine of the vehicle is enabled and the primary driver door is locked

The door of the vehicle is locked

FIG. 17

100

200

**FIG. 18**

200

PROCESSOR

210

MEMORY

220

**FIG. 19**

## INTERNATIONAL SEARCH REPORT

| International application No. |
| --- |
| **PCT/CN2023/097943** |

### A. CLASSIFICATION OF SUBJECT MATTER

H04W 64/00(2009.01)i

According to International Patent Classification (IPC) or to both national classification and IPC

### B. FIELDS SEARCHED

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE: 距离, 测, 测距, 往返, 定位, 钥匙, 锁, 蓝牙, 车, BLE, UWB, 接收, 发送, 发射, 时刻, 时间, 速度, 光速, distance, TOF, key, lock, bluetooth, car, vehicle, receive, transmit, time, velocity

### C. DOCUMENTS CONSIDERED TO BE RELEVANT

| Category* | Citation of document, with indication, where appropriate, of the relevant passages | Relevant to claim No. |
| --- | --- | --- |
| PX | CN 114928884 A (FUYAO GLASS INDUSTRY GROUP CO., LTD.) 19 August 2022 (2022-08-19)<br>claims 1-12 | 35-46 |
| PX | CN 114928885 A (FUYAO GLASS INDUSTRY GROUP CO., LTD.) 19 August 2022 (2022-08-19)<br>claims 1-34 | 1-34 |
| X | CN 113570761 A (GUANGZHOU XIAOPENG MOTORS TECHNOLOGY CO., LTD.) 29 October 2021 (2021-10-29)<br>description, paragraphs [0045]-[0074] and [0113]-[0125], and figures 4-6 | 1-46 |
| A | CN 112070931 A (NANJING TACKING AUTOMOBILE ELECTRONIC CO., LTD. et al.) 11 December 2020 (2020-12-11)<br>entire document | 1-46 |
| A | CN 114415108 A (NANJING SILERGY MICROELECTRONIC TECH CO., LTD.) 29 April 2022 (2022-04-29)<br>entire document | 1-46 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 August 2023** | **23 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 518 467 A1

**INTERNATIONAL SEARCH REPORT**

International application No.

**PCT/CN2023/097943**

**C. DOCUMENTS CONSIDERED TO BE RELEVANT**

| Category* | Citation of document, with indication, where appropriate, of the relevant passages | Relevant to claim No. |
|---|---|---|
| A | JP 2010180619 A (DENSO CORP.) 19 August 2010 (2010-08-19) entire document | 1-46 |

Form PCT/ISA/210 (second sheet) (July 2022)

International application No.

**PCT/CN2023/097943**

| Patent document cited in search report | | | Publication date (day/month/year) | Patent family member(s) | | | Publication date (day/month/year) |
|---|---|---|---|---|---|---|---|
| CN | 114928884 | A | 19 August 2022 | None | | | |
| CN | 114928885 | A | 19 August 2022 | None | | | |
| CN | 113570761 | A | 29 October 2021 | None | | | |
| CN | 112070931 | A | 11 December 2020 | None | | | |
| CN | 114415108 | A | 29 April 2022 | None | | | |
| JP | 2010180619 | A | 19 August 2010 | DE | 102010000304 | A1 | 12 August 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210621423X
- CN 202210621435